# EUROPEAN PATENT SPECIFICATION

(11) **EP 4 126 706 B1**
(45) Date of publication and mention of the grant of the patent: **15.10.2025**
(21) Application number: 21716652.9
(22) Date of filing: 29.03.2021
(51) Int. Cl.: B65G 1/02, B65G 1/04

(54) **AUTOMATED STORAGE SYSTEM HAVING A STORAGE TOWER IN ISOLATING HOUSING**
AUTOMATISIERTES LAGERSYSTEM MIT EINEM LAGERTURM IN EINEM ISOLIERGEHÄUSE
SYSTÈME DE STOCKAGE AUTOMATISÉ DOTÉ D'UNE TOUR DE STOCKAGE DANS UN LOGEMENT ISOLANT

(30) Priority: 31.03.2020 NO 20200391; 04.06.2020 NO 20200662; 26.06.2020 NO 20200752; 14.07.2020 NO 20200830; 22.10.2020 NO 20201146
(43) Date of publication of application: 08.02.2023
(60) Divisional application: 24220504.5
(73) Proprietor: AUTOSTORE TECHNOLOGY AS, 5578 Nedre Vats (NO)
(72) Inventor: AUSTRHEIM, Trond, 5590 Etne (NO); FAGERLAND, Ingvar, 5541 Kolnes (NO)
(74) Representative: Kilburn & Strode LLP
(86) International application number: PCT/EP2021/058140
(87) International publication number: WO 2021/198170

(56) References cited:
- WO-A1-2015/124610
- WO-A1-2016/198467
- WO-A1-2021/197941

## Description

### FIELD OF THE INVENTION

The present invention relates to automated storage systems.

### BACKGROUND AND PRIOR ART

### Automated Grid Storage systems generally

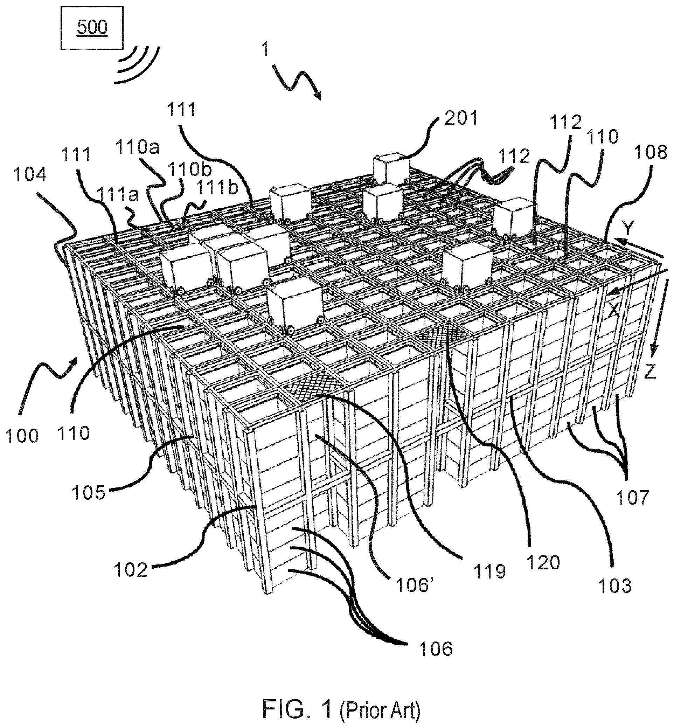

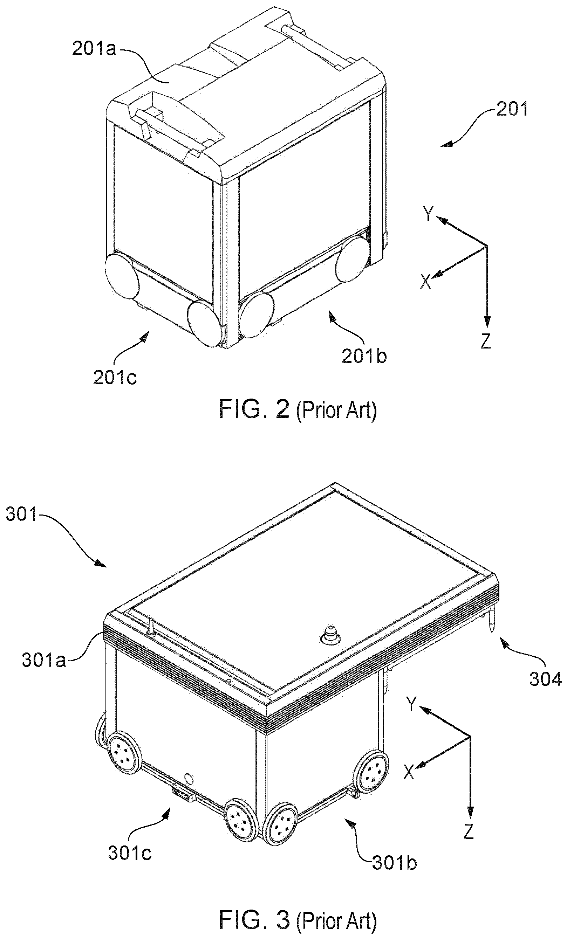

Fig. 1 discloses a typical prior art automated storage and retrieval system 1 with a framework structure 100 and Fig. 2 and 3 disclose two different prior art container handling vehicles 201,301 suitable for operating on such a system 1. Such systems may be referred to as an automated grid storage system, since the framework structure, when viewed from above, defines a grid pattern.

The framework structure 100 comprises upright members 102, horizontal members 103 and a storage volume comprising storage columns 105 arranged in rows between the upright members 102 and the horizontal members 103. In these storage columns 105 storage containers 106, also known as bins or storage containers, are stacked one on top of one another to form stacks 107. The members 102, 103 may typically be made of metal, e.g. extruded aluminium profiles.

The framework structure 100 of the automated storage and retrieval system 1 comprises a rail system 108 arranged across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301 in a first direction X across the top of the frame structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings 112 in the rail system 108. The container handling vehicles 201,301 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically selfsupportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device (not shown) for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301 so that the position of the gripping / engaging devices with respect to the vehicle 201,301 can be adjusted in a third direction Z which is orthogonal the first direction X and the second direction Y. Parts of the gripping device of the container handling vehicle 301 are shown in fig. 3 indicated with reference number 304. The gripping device of the container handling device 201 is located within the vehicle body 301a in Fig. 2.

Conventionally, and also for the purpose of this application, Z=1 identifies the uppermost layer of storage containers, i.e. the layer immediately below the rail system 108, Z=2 the second layer below the rail system 108, Z=3 the third layer etc. In the exemplary prior art disclosed in Fig. 1, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1.

Fig. 3 shows an alternative configuration of a container handling vehicle 301 with a cantilever construction. Such a vehicle is described in detail in e.g. NO317366.

The central cavity container handling vehicles 201 shown in Fig. 2 may have a footprint that covers an area with dimensions in the X and Y directions which is generally equal to the lateral extent of a storage column 105, e.g. as is described in WO2015/193278A1. The term 'lateral' used herein may mean 'horizontal'.

Alternatively, the central cavity container handling vehicles 101 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018/146304 illustrates a typical configuration of rail system 108 comprising rails and parallel tracks in both X and Y directions.

In the framework structure 100, a majority of the columns 105 are storage columns 105, i.e. columns 105 where storage containers 106 are stored in stacks 107. However, some columns 105 may have other purposes. In fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles specifically dedicated to the task of temporarily removing storage containers from a storage column 105. Once the target storage container 106 has been removed from the storage column 105, the temporarily removed storage containers can be repositioned into the original storage column 105. However, the removed storage containers may alternatively be relocated to other storage columns.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers positioned at or above the target position within the storage column stack 107 have been removed, the container handling vehicle 201,301 positions the storage container 106 at the desired position. The removed storage containers may then be lowered back into the storage column 105, or relocated to other storage columns.

For monitoring and controlling the automated storage and retrieval system 1, e.g. monitoring and controlling the location of respective storage containers 106 within the framework structure 100, the content of each storage container 106; and the movement of the container handling vehicles 201,301 so that a desired storage container 106 can be delivered to the desired location at the desired time without the container handling vehicles 201,301 colliding with each other, the automated storage and retrieval system 1 comprises a control system 500 which typically is computerized and which typically comprises a database for keeping track of the storage containers 106.

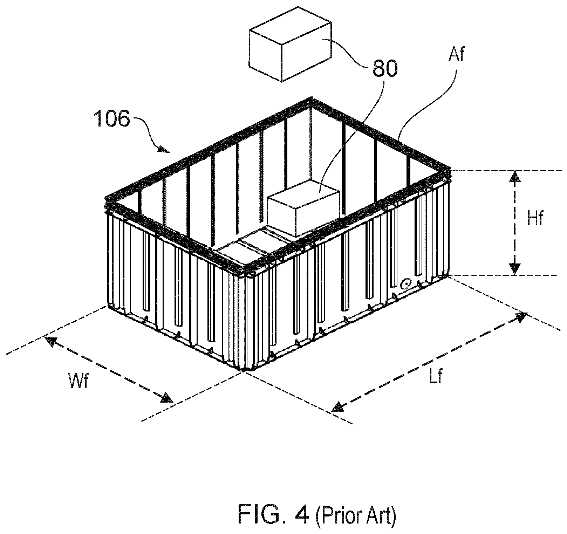

Fig. 4 shows examples of product items 80 stored in a storage container 106. The storage container 106 illustrated in Fig, 4 has a height *Hf,* a width *Wf* and a length *Lf.* The storage container 106 has a horizontal cross section *Af*.

### Digging

One of the primary advantages of a grid storage system as described above is the density with which containers are stored in the framework structure. To the greatest extent possible every available column of the grid is filled with containers, except for columns that are reserved for other purposes, such as for a port. Because of this density, however, there are challenges associated with accessing containers located at lower positions in columns. Not all containers in a column necessarily contain the same goods and it is sometimes necessary to access and lift a container lower down in a stack. In order to access such containers, the container handling vehicles execute a procedure known as "digging", whereby containers located above a target container are lifted out of a stack, and placed temporarily on the top of the grid at various locations. Once the target container is removed, the other containers are placed back in the column.

For systems containing a large number of bins in each stack, the above mentioned 'digging' may prove both time and space consuming when the target bin is located deep within the grid. For example, if the target bin has location Z=5, the vehicle(s) must lift four non-target bins and place them in other positions, often on top of the grid (Z=0), before the target bin can be reached. Before being replaced back into the grid, the non-target bins may force other container handling vehicles to choose non-optimized paths to execute their respective operations.

### Storage of perishable or other specialty goods

For certain products stored in a known automated storage and retrieval system 1, the products need to be stored in a specialized, isolated environment. Such products, e.g. frozen groceries or refrigerated products may require isolation from other areas of the storage grid due to a different temperature or other reasons. In the case of refrigerated or frozen goods, the products are often separated from the top level of the grid by insulated covers on the top of the columns. This is partly due to the fact that the container handling vehicles operate optimally at ambient temperatures. The vehicles access the frozen or refrigerated products by first removing the insulated covers, and then access the containers as described above.

This creates a challenge however in terms of the "digging" operation described above. It is not desirable to place containers containing frozen or refrigerated products at temporary spots in the ambient temperature of the top level of the grid while the digging operation is completed. There is a need, therefore, for an arrangement whereby the specialized goods can be accessed without the need for the digging operation.

### Other art

WO2015/124610 A1 was identified by the EPO as the 'closest prior art' and considered by the EPO to disclose an automated storage and retrieval system comprising: an isolating housing, comprising walls, and arranged to isolate goods stored within the isolating housing from an outside environment, the goods being stored in storage containers; a rail system upon which rail system may travel one or more wheeled container handling vehicles, the container handling vehicles comprising a lifting device for lifting and lowering containers; a storage tower arranged inside the isolating housing, the storage tower being accessible to the container handling vehicle or vehicles; and an automated control system, wherein insulating covers are arranged between the rails of the rail system and may be lifted by container handling vehicles so that container handling vehicles may lower their lifting device and access containers stored in the storage tower.

WO 2021/197941, which was identified by the EPO as prior art relevant for the question of novelty according to Article 54(3) EPC, describes, according to its abstract, a storage tower, an automated storage and retrieval system and a method of using same. The automated storage and retrieval system does not comprise an insulating housing. The storage tower comprises a plurality of container supports, each being configured as a matrix of container spaces with a plurality of columns of container spaces arranged in a first direction and a plurality of rows of container spaces arranged in a second direction. Each row of container spaces of a first container support displays at least one opening extending along the second direction, the at least one opening having an opening size being at least a maximum horizontal cross section of the storage containers to be stored, wherein the at least one opening of the first container support framework and the at least one opening of a second container supporting framework can be aligned vertically with respect to each other. At least one container support is displaceable along the second direction.

### SUMMARY OF THE INVENTION

### Isolated environment

According to one aspect, the invention is an automated storage and retrieval system according to claim 1. The automated storage and retrieval system comprises an isolated environment for the storage of specialized goods stored in storage containers, wherein the storage containers may be retrieved by container handling vehicles operating over the isolated environment on a track system as described above, without the need to perform a digging operation. According to one embodiment of the invention, the specialized goods are frozen or refrigerated goods, and the isolated environment is a dedicated space having a lowered temperature such as a refrigeration or freezer room.

According to other embodiments of the invention, the specialized goods may be other types of items that for various reasons require isolation or dedicated storage. Examples include, but are not limited to volatile, flammable or potentially explosive items desirably stored in dedicated, specialized storage rooms, sterile items that require being stored in a specialized, sterile environment, items that must be stored in specialized atmospheric conditions such as a higher or lower oxygen environment, pressures different than atmospheric pressure or the like.

The isolated environment may be a self-contained unit with its own, dedicated container handling vehicles, or it may be operatively connected to a standard grid portion of an automated grid storage and retrieval system. As used herein, a "standard" grid storage system, or the "standard portion" of a storage and retrieval system is an automated storage and retrieval system as described in the background section of this application. The term "operatively connected", as used herein, means that the isolated environment is accessible by the same container handling vehicles operating above the standard portions of the storage and retrieval system, via a track system that is contiguous with both the isolated environment and the standard portion of the storage and retrieval system. For example, the isolated environment may be arranged adjacent to a standard storage grid portion of a storage and retrieval system, or may be arranged within the periphery of a standard storage grid. Alternatively, an "operatively connected" isolated environment may be located a distance from the standard portions of the storage and retrieval system, and accessible by the container handling vehicles over a bridge.

The present invention will be described in connection with an isolated, refrigerated environment, however one skilled in the art will recognize that the isolated environment may be specifically adapted for other types of specialized goods.

The isolated environment according to one embodiment is a room having walls and a roof, which in the presently described case is a refrigeration room having insulation to maintain a lowered temperature. One or more doors may be arranged in the walls to provide access to the interior of the room. The refrigeration room contains refrigeration equipment in order to maintain the room at a desired temperature.

Arranged in the roof of the refrigeration room is one or more closable and openable hatches, though which the lifting device of a container handling vehicle may lower its gripping and engagement device for removing or replacing storage containers through the hatch. The track system of the grid extends at least over the hatch or hatches, allowing the container handling vehicles to position themselves over a hatch.

### Storage tower

Located within the isolated environment (in the present example the refrigeration room) is a storage tower. The storage tower comprises a plurality of vertically stacked, horizontally movable container supports, in the form of horizontally movable shelves, upon which rest a plurality of storage containers.

The size and number of container supports of the storage tower may be adapted to the size of the refrigeration room. The container supports have a lateral width corresponding to a plurality of storage container spaces, for example four container spaces wide. The container supports also have a longitudinal length corresponding to a plurality of storage container spaces, in a non-limiting example used solely for illustration purposes a longitudinal length of five storage container spaces, thereby defining five lateral rows, each row having four storage container spaces.

The container supports are arranged to move in the horizontal direction in order to present a target container on a target container support to the bottom of a so-called "tower port" directly beneath a hatch. The details of the "tower port" are described below. The container handling vehicle may lower its gripping device down through the tower port to the target storage container that has been moved into position beneath the hatch, thereby allowing the container handling vehicle to lift containers out of the refrigeration room without the need to perform a digging operation.

### Tower port

One or more of the lateral rows of the container supports, for example the third row for illustration purposes, will comprise one or more openings corresponding to the size of a storage container (through which a container may pass), rather than being spaces for actually holding containers. The container supports may be moved horizontally in order to align themselves such that vertically adjacent openings become vertically aligned, thus creating one or more open, vertical shafts, referred to herein as "tower ports". In the above non-limiting example, the third rows of respective container supports may be aligned to create one or more tower ports. Each tower port so formed will be arranged beneath a corresponding hatch. The depth of the tower port so formed will depend upon the number of container supports so aligned.

When a target container, held on a target container support, is to be removed, the container supports above the target container support will align themselves to form a tower port beneath a hatch, with the tower port extending down to the target container support. The target container support will move in the horizontal direction in order to present the target container at the bottom the tower port, thereby allowing the container handling vehicle to lower its gripping device though hatch and down the tower port to the target container without the need for digging.

According to claim 1, the invention comprises:
a. an isolating housing, comprising walls and a roof, and arranged to isolate goods stored within the housing from an outside environment, the goods being stored in storage containers,
b. one or more openable and closable housing openings or hatches arranged in the roof of the isolating housing,
c. a rail system arranged above the roof, upon which rail system may travel one or more wheeled container handling vehicle, the container handling vehicles comprising a lifting device for lifting and lowering containers, the rail system at least arranged such that a container handling vehicle may be positioned with its lifting device positioned above a hatch,
d. a storage tower arranged inside the isolating housing, the storage tower being accessible to the container handling vehicle or vehicles through a hatch, the storage tower comprising:
   i. a plurality of vertically stacked container supports, the container supports being in the form of horizontally movable shelves upon which may rest a plurality of storage containers, the container supports having a lateral width corresponding to a plurality of container spaces and a longitudinal length corresponding to a plurality of container spaces, thereby defining a plurality of lateral rows of container spaces, and wherein one or more of the container spaces of a lateral row is an opening corresponding in size to a storage container such that storage containers may pass therethrough,
   ii. means for horizontally moving container supports in order to align the openings of vertically adjacent container supports to form a tower port beneath a hatch,
   iii. means for horizontally moving a target container support in order to position a target container at the bottom of the tower port,
e. a control system for controlling and automating the functions of the storage and retrieval system, and
f. whereby the container handling vehicle may lower its lifting device though the hatch, down the tower port, and access the target container.

According to another aspect the invention is a method according to claim 9.

### BRIEF DESCRIPTION OF THE DRAWINGS

The following drawings depict embodiments of the present invention and are appended to facilitate the understanding of the invention. The drawings show embodiments of the invention, which will now be described by way of example only, where:
Fig. 1 is a perspective view of a framework structure of a prior art automated storage and retrieval system;
Fig. 2 is a perspective view of a prior art container handling vehicle having a centrally arranged cavity for carrying storage containers therein;
Fig. 3 is a perspective view of a prior art container handling vehicle having a cantilever for carrying storage containers underneath;
Fig. 4 is a perspective view of a prior art storage container and product items stored in the storage container;
Fig. 5 is a top view of a storage tower of an automated storage and retrieval system according to an embodiment of the invention, shown without its isolating housing, where all container supports of a storage tower are vertically aligned;
Fig. 6 is a side view of the storage tower of figure 5;
Fig. 7 is a perspective view of a container support configured as a matrix of container spaces with a plurality of container spaces (in this case four) arranged laterally in the first horizontal direction X and a plurality of lateral rows (in this case five) of container spaces arranged longitudinally in the second horizontal direction Y, and with a plurality of openings arranged in one of the lateral rows (in this case the third row) in place of container spaces;
Fig. 8 is a perspective view of the container support of figure 7, showing storage containers positioned in the container spaces and showing the openings in the third row;
Fig. 9 is a perspective view of details of a container support and a container support framework, in particular of a support displacement device;
Fig. 10 is a perspective view of details of the container support, in particular of shelf rollers;
Fig. 11 is a perspective view of further details of the container support and the container support framework, in particular of a support displacement device, where a lowermost container support is horizontally displaced relative to the above container supports;
Fig. 12 is a side view of a storage system in accordance with an embodiment of the invention, where the storage tower is positioned adjacent to a standard portion of the storage grid;
Fig. 13 is a perspective view of the storage system of Fig. 12, where a storage grid and a storage tower are positioned side by side;
Fig. 14 is a perspective view of the storage system of Fig. 12, where a storage grid and a storage tower are positioned side by side, where one container support is horizontally displaced;
Fig. 15A is a perspective view of the storage system of Fig. 12, where a storage grid and a storage tower are positioned side by side, where a plurality of container supports are horizontally displaced in opposite directions;
Fig. 15B is a cross-section of the storage system in accordance with Fig. 15A;
Fig. 16A and Fig. 16B are different perspective views of another embodiment of the storage system according to the invention, where a storage tower is positioned below a transport system;
Fig. 17 is a side view of the storage system of Fig. 16A;
Fig. 18A and Fig. 18B are different perspective views showing details of the storage system of Fig. 16A-B and 17A-B, in particular of the transport mechanism;
Fig. 19A-C are perspective views of three storage towers, each with a different configuration of the container support frameworks and the container supports;
Fig. 20 is a perspective view of a storage tower enclosed by an isolating housing, positioned adjacent to a standard portion of a storage grid;
Fig. 21 is a cross-section of the storage system in accordance with Fig. 20 illustrating a container handling vehicle positioned with its lift device above a hatch in the roof of the isolating housing and above a tower port; and
Fig 22 is a cross sectional view illustrating the horizontal displacement of six container supports in order to form a tower port above a target container.

### DETAILED DESCRIPTION OF THE INVENTION

In the following, different alternatives will be discussed in more detail with reference to the appended drawings. It should be understood, however, that the drawings are not intended to limit the scope of the invention to the subject-matter depicted in the drawings. Furthermore, even if some of the features are described in relation to the system only, it is apparent that they are valid for the methods as well, and vice versa.

In the preceding description, various aspects of the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention. The claimed invention is defined in the appended claims.

The present invention concerns an improvement to a grid storage system of the type described in the background section of this application, and as illustrated in Figs 1-4.

### STORAGE TOWER

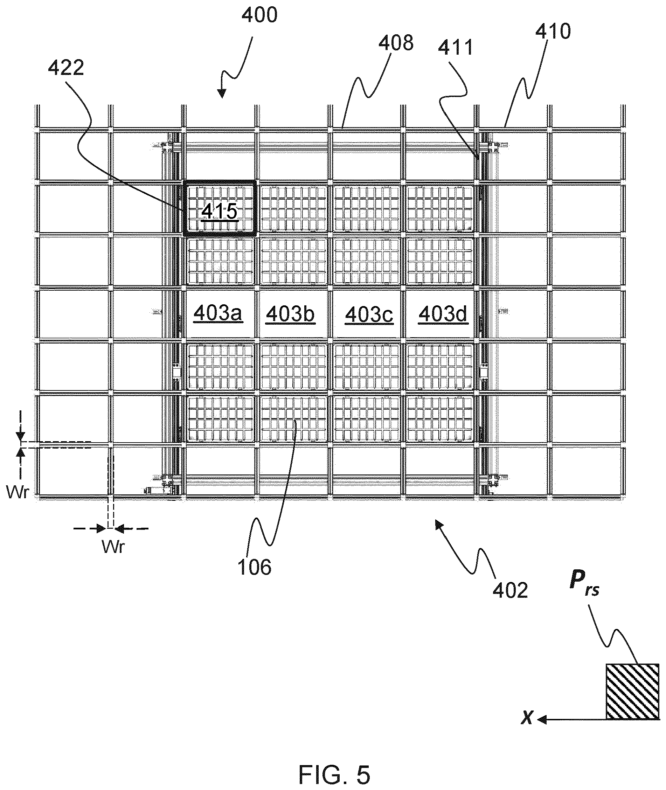

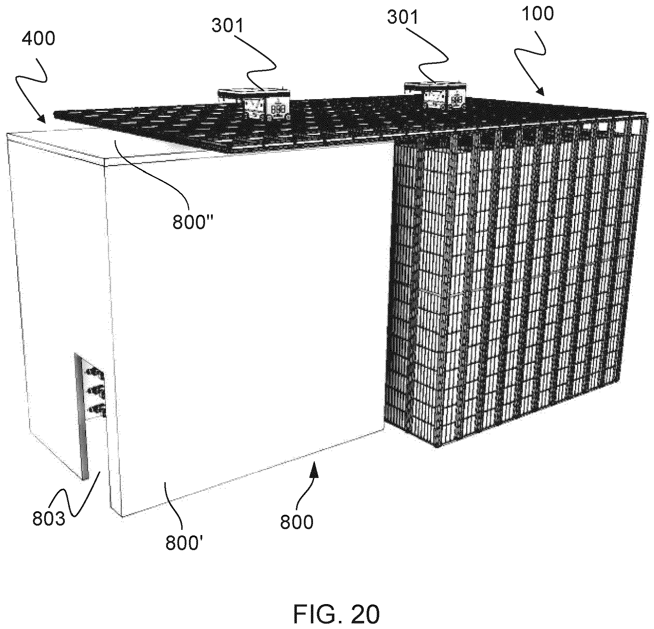

A storage tower 400 as illustrated in Figs 5-19 is arranged in an isolating housing 800 as illustrated in Figs 20-22.

According to one aspect, the storage tower in its isolated environment may be a self-contained unit. In another aspect, the storage tower in its isolated environment may be operatively connected to, for example adjacent to, within the periphery of, or otherwise in cooperation with a standard portion of a grid storage system 1.

Storage system 1 comprises remotely operated vehicles 301 operating on a rail system 408 comprising a first set of parallel rails 410 arranged to guide movements of the remotely operated vehicles 301 in a first direction X across a storage tower 400 and a second set of parallel rails 411 arranged perpendicular to the first set of rails 410 to guide movement of the remotely operated vehicles 301 in a second direction Y which is perpendicular to the first direction X. The storage containers 106 stored within the storage tower 400 are accessed by the remotely operated vehicles 301 through grid openings 415 in the rail system 408. Each grid opening 415 of the rail system 408 is enclosed by portions of the rails 411 to define a grid cell 422. The rail system 408 extends in a horizontal plane *Pᵣₛ*.

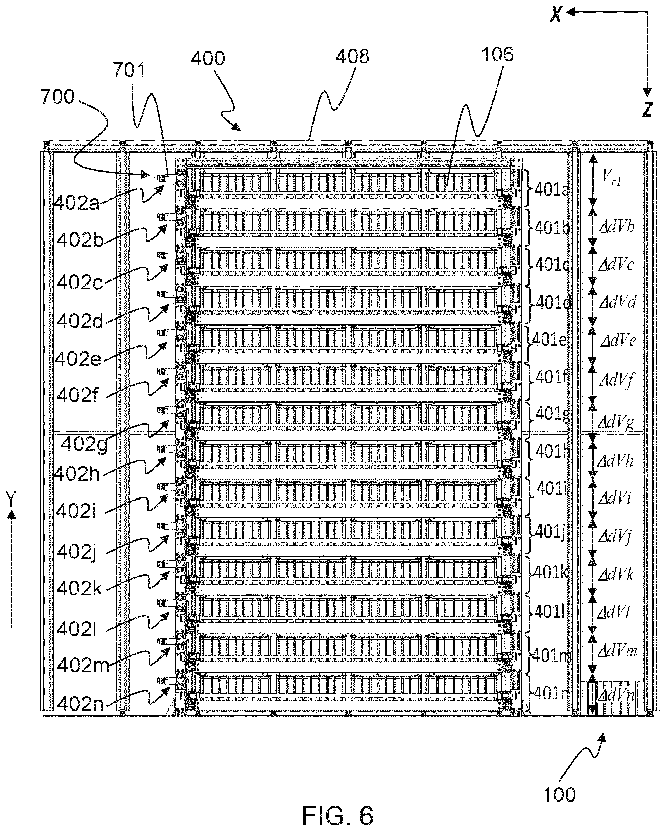

As best seen in Fig. 6, the storage containers 106 are stored on a plurality of horizontally movable container supports 402, movably arranged on a plurality of support frameworks 401 stacked in a Z direction below the rail system 408 with a vertical offset indicated by *Vᵣ₁* (i.e. the offset between the lower edge of the rail system 408 and the lower edge for the first container support framework 401a directly beneath the rail system 408) and a vertical offset indicated by *ΔdVb-n* (i.e. the offset between the lower edges of two adjacent container support frameworks 401a-n).

The vertical offsets *Vᵣ₁* and *ΔdVb-n* may be selected to provide a height that is equal to or higher than a maximum height of one storage container 106 or a stack 107 of several storage containers 106 or equal to or higher than a maximum height of different storage containers 106 stored in respective container support frameworks 401. As an example, the first container support framework 401a may be adapted to store stacks 107 of storage containers 106 while the below situated container support frameworks 401b-n may be adapted to store single (unstacked) storage containers 106. As a further example, several or all container support frameworks 401 of the tower 400 may be adapted to store stacks 107 of several storage containers 106. The different container support frameworks 401 of the same tower 400 may be configured to store stacks 107 of unequal numbers of storage containers 106. The vertical space (i.e. the available height) required for one or several container support frameworks 401 of the tower 400 to be adapted to store a stack 107 of several storage containers 106 may be obtained by reducing the total number of container support frameworks 401 as compared to a configuration of the tower 400 where all container support frameworks 401 are adapted to store single (unstacked) storage containers 106.

Fig. 6 shows a storage tower 400 where each container support framework 401a-n comprises one horizontally extending container support 402.

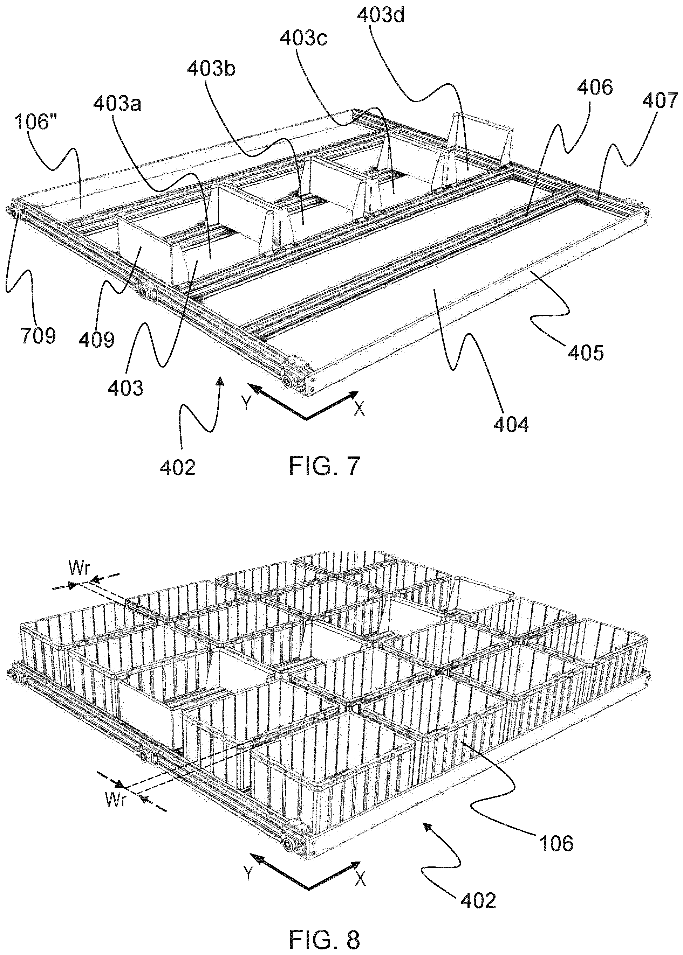

Fig. 7 and Fig. 8 show an example of such a container support 402. Fig. 7 shows a container support 402 without storage containers 106 occupying container spaces 106", and Fig. 8 shows the same container support 402 where storage containers 106 are positioned in the container spaces. Fig 7 shows five lateral rows of four container spaces 106" (which are occupied by containers 106 in Fig 8), with the container spaces of the third row replaced by openings 403a-d.

The container support 402 has a lateral direction in a first direction X and an orthogonal, longitudinal direction in a second direction Y. The container support 402 is configured as a horizontal matrix of container spaces 106", with a plurality of container spaces arranged in lateral rows in the first horizontal direction X and a plurality of such rows arranged in the second horizontal direction Y. The rows of container spaces are configured to receive a plurality of storage containers 106. One or more of the rows comprises one or more opening 403, illustrated in Fig 7 as four openings 403a-d, occupying each of the four container spaces of the third row. The opening or openings 403 are sized to permit a storage container 106 to pass through the opening. The container support 402 of the lowermost container support framework 401n typically does not display an opening 403. The at least one opening 403 of each row of container spaces typically has an opening size being at least a horizontal cross section *A_{f}*(*W_{f} * L_{f}*) of the storage containers 106 to be stored.

As will be described further below, container supports 402 may be moved horizontally such that openings 403 of vertically adjacent container supports 402 align to form a tower port 805, through which containers may be lifted or lowered by a container handling vehicle. The container support 402 of Fig. 7 and Fig. 8 comprises a plurality of guide structures 409 for the openings 403. The guide structure 409 is fixed along the peripherals of each opening 403a-d in order to aid the storage container 106 to be guided correctly through the opening 403a-d during lifting / lowering by the respective remotely operated vehicles 201;301;601.

The container support 402 may be a plate or a frame without inner structure. The container spaces typically have a horizontal extent being at least a maximum horizontal cross section *A_{f}* (*W_{f} * L_{f}*) of the storage containers 106 to be stored. Each space taken up by a storage container 106 is typically spaced on the plate or frame from the next by a distance corresponding to the width of the rails 410,411. The matrix of container spaces could be an imaginary division primarily set by the size of the storage containers 106. The container support may be of any size, with the size of the matrix of container spaces being dependent on the number of rows and the number of container spaces in each row of the matrix.

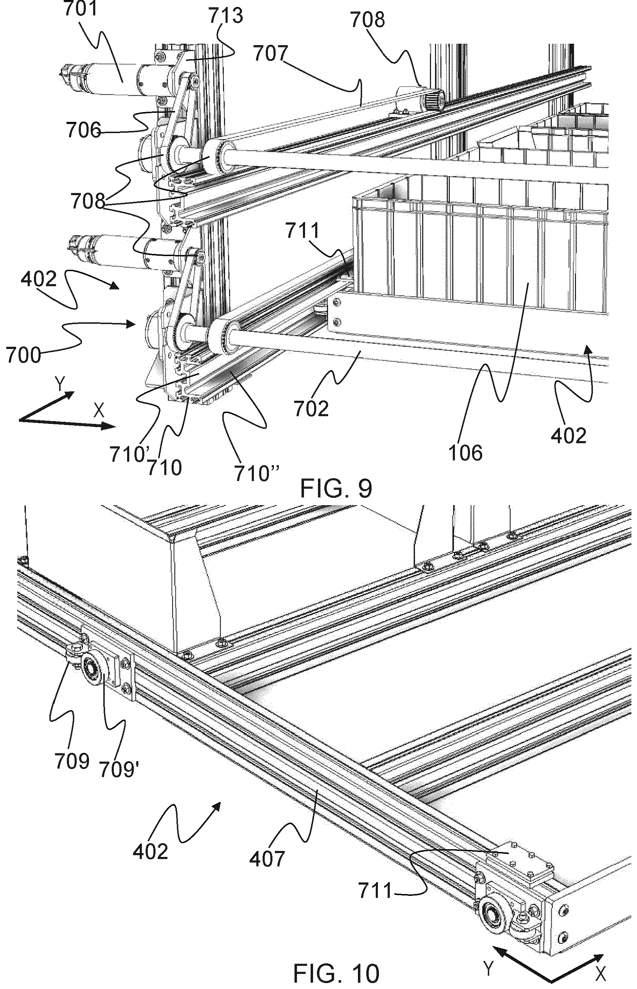

The opening 403, i.e. the perimeter of the at least one opening 403a-d, of the first container support 402a arranged in support framework 401a and the at least one opening 403 of the second container support 402b, arranged in the second container support framework 40b-n can be aligned vertically with respect to each other. This can be achieved by the at least one container support 402 of the at least one second container support framework 401b-n being displaceable horizontally along the second direction Y. The displacement may be achieved by the at least one second container support framework 401b-n comprising a support displacement device 700 configured to displace the displaceable container support 402 of the at least one second container support framework 401b-n. An example of such a support displacement device 700 is illustrated in Fig. 9 and further described below.

The container support 402 of Fig. 7 and Fig. 8 comprise support plates 404 providing container spaces 106". In Fig. 8, storage containers 106 are placed on top of the support plates 404. One support plate 404 may provide any number (here illustrated as four) container spaces distributed along the first horizontal direction X forming a complete row. Alternatively, each row may comprise a plurality of support plates 404, e.g. one support plate 404 per container space. As a further alternative, one support plate 404 may provide two or more container spaces distributed along the second horizontal direction Y forming at least a part of a row. One support plate 404 may also provide a plurality of container spaces distributed along both the first direction *X* and the second direction *Y.*

According to one aspect, each container support 402 may comprise a first container support beam 406 extending in the first horizontal direction X and a second container support beam 407 extending in the second horizontal direction Y. The first and second support beams 406,407 may be used to provide stiffness and stabilize the container support 402 in the horizontal plane Pᵣₛ. The first support beams 406 may extend the full length of a column. The second support beams 407 may extend the full length of a row.

In Fig. 7-8, a first support beam 406 is arranged between each row of container spaces, in total four first beams 406. The first support beams 406 may be used for attachment of the guide structures 409. The first support beams 406 may also be used for attachment of the support plates 404. The first support beams 406 may protrude upwards relative to the support plates 404, thereby preventing storage containers 106 from moving along the second horizontal direction Y relative to the container support 402. The first support beams 406 may also be used to support storage containers 106 and thus provide container spaces, i.e. a container space without a support plate 404.

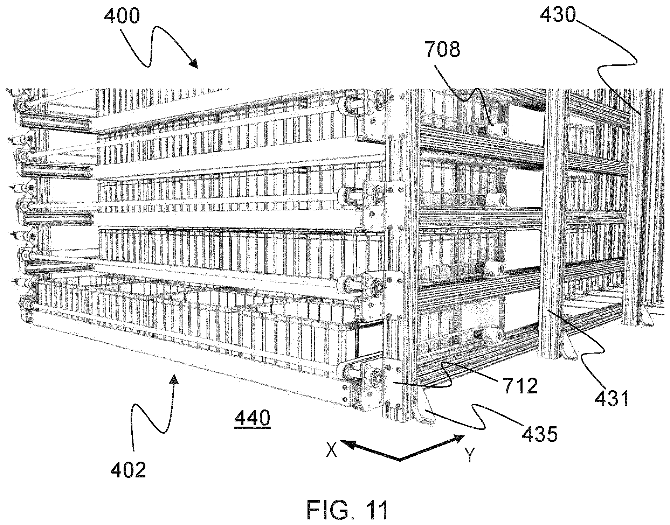

In Fig. 7-8, two second support beams 407 are arranged in parallel with the rows. In this example the second support beams 407 are arranged not to divide the rows, i.e. on the edges of the container support 402. Second support beams 407 may additionally be arranged to divide the rows. The second support beams 407 may be used for attachment of the guide structures 409. The second support beams 407 may also be used for attachment of the support plates 404. The second support beams 407 may protrude upwards relative to the support plates 404, thereby preventing storage containers 106 from moving in the first direction X relative to the container support 402. The second support beams 407 may also be used to support storage containers 106 and thus provide container spaces, i.e. a container space without a support plate 404. Alternatively, the first and second support beams 406,407 may together provide container spaces. The second support beams 407 may also be used for attachment of shelf guides 709. The second support beams 407 may also be used for attachment of horizontal movement shelf rollers 709'. The shelf rollers 709,709' are further described below with reference to Fig. 10. The second support beams 407 may also be used for attachment of vertical pillars 431. These are inter alia illustrated in Fig. 11.

Each container support 402 may comprise a stabilization rib 405 arranged in the first direction *X.* In Fig. 7-8, two stabilization ribs 405 are arranged not to divide the rows, i.e. on the edges of the container support 402. The stabilization ribs 405 may additionally be arranged to divide the rows. The stabilization ribs 405 may be used for attachment of the guide structures 409.

The stabilization ribs 405 may also be used for attachment of the support plates 404. The stabilization ribs 405 may have a vertical extent higher than the support plate 404. The stabilization ribs 405 may be used for stabilizing storage containers 106. The stabilization ribs 405 may also stabilize the container support by stiffening the structure to prevent twisting, e.g., under uneven loading. Stabilization ribs 405 may also be arranged in the second direction Y. The stabilization rib 405 may replace one or more first support beams 406, and vice versa. The stabilization rib 405 may replace one or more second support beams 407, and vice versa.

The first support beam 406, the second support beam 407 the stabilization rib 405, the support plate 404, the guide structure 409 and any other components associated with the container support 402 may be connected to each other by means of fasteners, welding, snap lock systems, tongue and groove system or other known methods know to those skilled in the art.

Fig. 9 and Fig. 10 show that a container support 402 of one or more container support frameworks 401 may be made displaceable along the second horizontal direction Y relative to the container support framework 401. To displace the displaceable container support 402 along the second horizontal direction Y, the container support framework 401 of Fig. 9 comprises a support displacement device 700. Alternatively, the container support 402 may comprise the support displacement device 700. The support displacement device 700 is configured to displace the displaceable container support 402 relative to the container support framework 401.

To be displaceable along the second horizontal direction Y, the container support 402 and the corresponding container support framework 401 comprises a guide track 710 and a plurality of shelf rollers 709,709'. The shelf rollers 709,709' are configured to travel along the guide track 710. The guide track 710 may be provided on the container support framework 401 and the shelf rollers 709,709' may be provided on the container support 402 as illustrated in Fig. 9 and Fig. 10, or vice versa.

The guide track 710 of Fig. 9 is an extruded profile. This guide track 710 comprises a horizontal part 710" and a vertical part 710'. When the guide track 710 is arranged with a longitudinal direction extending along the second horizontal direction Y, the horizontal part 710" is horizontally extending and the vertical part 710' is vertically extending.

The rollers 709,709' of Fig. 10 are provided in pairs comprising a shelf guide 709 and a horizontal movement shelf roller 709'. The shelf guide 709 has a vertically oriented axis of rotation. The horizontal movement shelf roller 709' has an axis of rotation oriented along the first horizontal direction X. As illustrated in Fig. 7, three pairs of rollers 709,709' can be arranged along the side of the container support 402 to cooperate with the corresponding guide track 710. The pairs of rollers 709,709' are distributed with one pair in the centre and one pair at each distal end of the edge of the container support 402. One container support 402 will typically have rollers 709,709' arranged at two opposing edges.

Fig. 9 shows how the horizontal movement shelf rollers 709' cooperate with the guide track horizontal part 710", in that the horizontal movement shelf rollers 709' can roll along the guide track horizontal part 710". The cooperation of the guiding track horizontal part 710" and the horizontal movement shelf rollers 709' allow the relative displacement between the container support 402 and the container support framework 401.

Fig. 9 shows how the shelf guides 709 cooperate with the guide track horizontal part 710, in that the vertical movement shelf rollers 709' can roll along the guide track vertical part 710". The cooperation of the guiding track vertical part 710' and the shelf guides 709 control the direction of the relative movement between the container support 402 and the container support framework 401.

Fig. 9 shows an example of a support displacement device 700. This support displacement device 700 comprises an electric motor 701. The electric motor 701 is arranged on the container support framework 401 by means of a bracket 713. The bracket can e.g. be connected to a vertical pillar 431. For maintenance purposes, the components of the support displacement device 700 are preferably arranged in positions easily accessible for technicians. In particular the electric motors 701 or alternative drive devices should preferably be arranged on the edge of the container support framework 401 and extending on the outside of the container support framework 401. Preferably also close to a corner of the container support framework 401. By arranging the electric motors 701 of adjoining container support frameworks 401 on opposite sides of the container support frameworks 401, more space is made available for the technicians to install or perform maintenance on the electric motor 701 and/or the support displacement device 700.

The support displacement device 700 comprises a drive shaft 702 configured to be driven by the electric motor 701. The drive shaft 702 is also configured to drive, i.e. displace, the displaceable container support 402.

Fig. 9 and Fig. 11 show how the drive shaft 702 can be arranged on the container support framework 401. The drive shaft 702 is arranged on the container support framework 401 by means of brackets 712. These brackets 712 can be arranged on the vertical pillars 431. These brackets 712 are typically arranged at the distal ends of the drive shaft 702. The brackets 712 must allow rotation of the drive shaft 702. The drive shaft 712 is arranged substantially level and extends along the first direction X.

In Fig. 9 and Fig. 11, rotation of the electric motor 701 causes rotation of the drive shaft 702 by means of a belt wheel 708 arranged on the electric motor 701, a belt wheel 708 arranged on the drive shaft 702, and a first belt 706 connecting these belt wheels 708. The belt wheel 708 arranged on the drive shaft 702 is arranged on the distal end of the drive shaft 702 to align with the belt wheel 708 arranged on the electric motor 701. In Fig. 9 and Fig. 11, each drive shaft 702 is driven by one electric motor 701. This is advantageous since it requires fewer parts and the movements along each side are synchronised by the drive shaft 702 which is common to both sides. Alternatively, two electric motors 701 can be provided for each drive shaft 702, connected to opposite ends of the drive shaft 702 or drive shaft portions.

In Fig. 9 and Fig. 11, rotation of the drive shaft 702 causes displacement of the displaceable container support 402 by means of two belt wheels 708 arranged on the drive shaft 702, two belt wheels 708 arranged on the container support framework 401, two brackets 711 arranged on the container support 402, and two second belt 707.

The two belt wheels 708 arranged on the drive shaft 702 and configured to drive the container support 402 are concentric with each other and concentric with the belt wheel 708 arranged on the drive shaft and configured to cooperate with the electric motor 701.

The two belt wheels 708 arranged on the container support framework 401 are provided on opposite sides of the container support framework 401 and connected e.g. to the guiding tracks 710 or the vertical pillars 431. The belt wheels 708 arranged on the container support framework 401 are aligned with the belt wheels 708 arranged on the drive shaft 702.

The two second belts 707 each connect one belt wheel 708 arranged on the drive shaft 702 with one belt wheel 708 arranged on the container support framework 401. When connected, the second belts 707 extend along the second horizontal direction Y. The second belts 707 then extend in the same direction as the intended displacement of the container support 402. The extension of the second belts 707 along the second horizontal direction Y should substantially corresponding to or exceed the predetermined distance of displacement of the container support 402.

The two second belts 707 are arranged with a distance between them in the first direction X exceeding the horizontal extension of the container support 402 along the first direction X.

The two brackets 711 are arranged on opposite sides of the container support 402 and facing respective second belts 707. Each bracket 711 is aligned with and connected to respective second belts 707. The bracket 711 and the second belt 707 can be clamped by means of a plate bolted to the bracket 711 and the second belt being arranged between them. In this way the bracket can be connected to any given part of the second belt 707.

The direction of displacement of the container support 402 depends on the direction of rotation of the drive shaft 702 and thus the direction of rotation of the electric motor 701. By providing a clockwise rotation from the electric motor 701, the container support 402 will be displaced in an opposite direction as compared to when a counter-clockwise rotation is provided from the electric motor 701. The displacement-rotation ration between the container support 402 and the drive shaft 702 or the electric motor 701 can be configured by selecting the size of the belt wheels 708.

Fig. 11 is a perspective view of a lowermost part of the storage tower 400. The lowermost container support 402n, i.e. one of the second container supports 402b-n, are displaced relative to the above container supports 402. The displaced container support 402 is displaced a distance in the second direction Y corresponding to one grid cell 422.

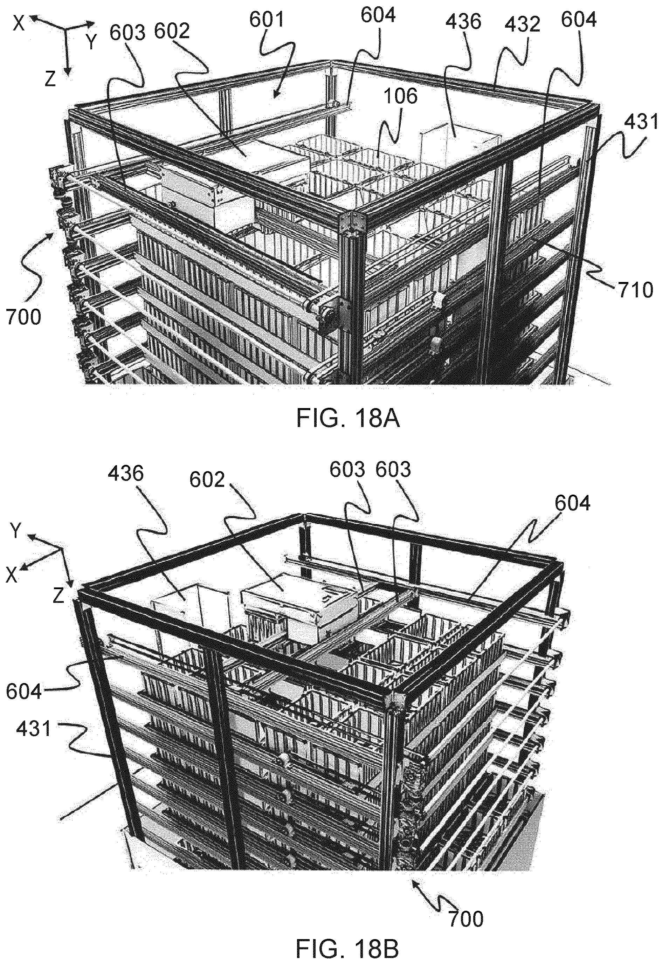

In Fig. 11 it is shown that the storage tower 400 comprises a plurality of vertical pillars 431. These vertical pillars 431 are typically supported by a floor 440, and possibly also connected to the floor 440 by means of pillar brackets 435. The plurality of vertical pillars 431 are configured to support a plurality of guide tracks 710. If the storage tower 400 comprises a rail system 408, the plurality of vertical pillars 431 can be configured to support the rail system 408. The vertical pillars 431 are distributed with distances along the first direction X and/or the second direction *Y* that are larger than the distances between the upright members 102 of the prior art framework structure 100. This is because the container supports 402 have a larger span than the storage columns 105 of the prior art framework structure 100. Therefore, each vertical pillar 431 should be configured to withstand greater loads than the upright members 102 since there are fewer of them. If the storage tower 400 comprises a transport system 601, the plurality of vertical pillars 431 can be configured to support the transport system 601. This is illustrated in Fig. 18A and 18B.

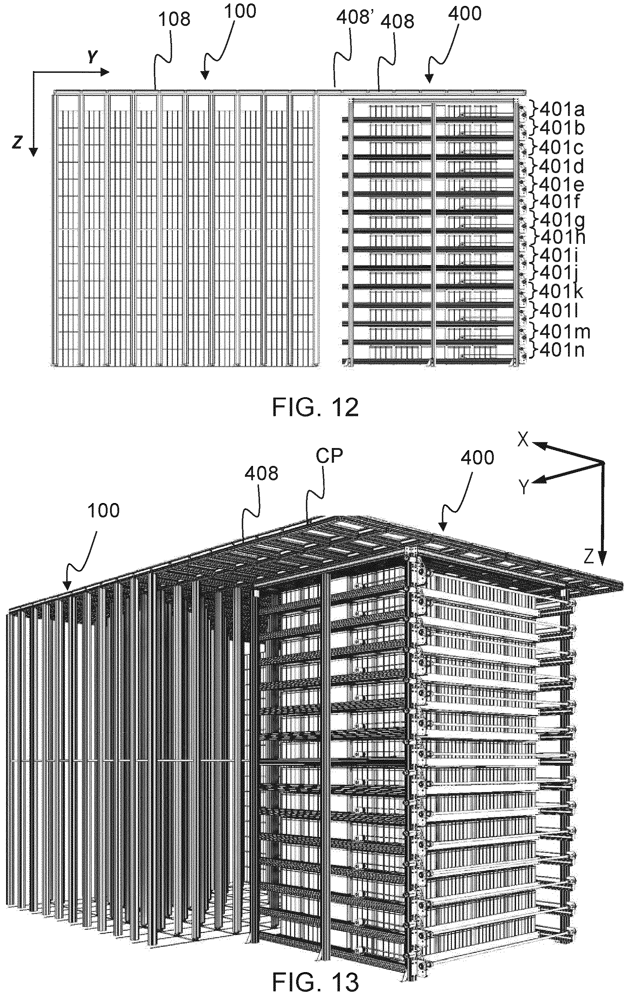

Fig. 12 shows a side view of a storage and retrieval system with one storage tower 400 arranged adjacent to a standard portion of the storage grid 100. The above-mentioned support displacement devices 700 are shown arranged at the end of each container support 402. This particular configuration comprises fourteen container support frameworks 401a-n arranged beneath a rail system 408, each with one container support 402 displaceable in the *Y* direction. Other numbers of container support frameworks could be present as appropriate. Preferably there are more than five container support frameworks, more preferably more than ten. In order to enable movement between the storage grid 100 and the storage tower 400, a coupling rail system 408' is seen interconnecting the rail system 108 of the prior art storage grid 100 and the rail system 408 of the inventive storage tower 400. The rail system 408 of the inventive storage tower 400 and the rail system 108 of the prior art storage grid 100 have a mutual orientation and design such that the same type of vehicles 301 may operate on both rail systems 108,408. Due to the different construction of the container support frameworks 401 for the inventive storage tower 400 and the stacks 107 of storage containers 106 for the prior art storage grid 100, the rails 410,411 above the container support frameworks 401 can with advantage be made wider compared to the rails 110,111 above the stacks 107, at least in one of the *X-Y* directions.

Fig. 13 shows a perspective view of the same storage and retrieval system 1 as Fig. 12. Both the storage tower 400 and the storage grid 100 can be of any size. In particular it is understood that the storage tower 400 and/or the storage grid 100 can be considerably wider and/or longer and/or deeper than disclosed in the accompanied figures. For example, storage tower 400 and/or the storage grid 100 may have a horizontal extent having space for more than 700x700 storage containers 106 and a storage depth of more than fourteen storage containers 106. The storage tower may also be arranged within the periphery of the storage grid 100, or at a distance from the storage grid, and accessible to the vehicles over a bridge (not shown).

One way of installing the storage tower 400 as described above can be to remove all stacks 107 of storage containers 106 beneath a rail system 108 part of a prior art storage and retrieval system 1 as shown in Fig. 1, leaving a cantilever part *CP* of the rail system 108. Then inserting one or more inventive storage towers 400 within the empty volume below the cantilever part *CP* of the rail system 108.

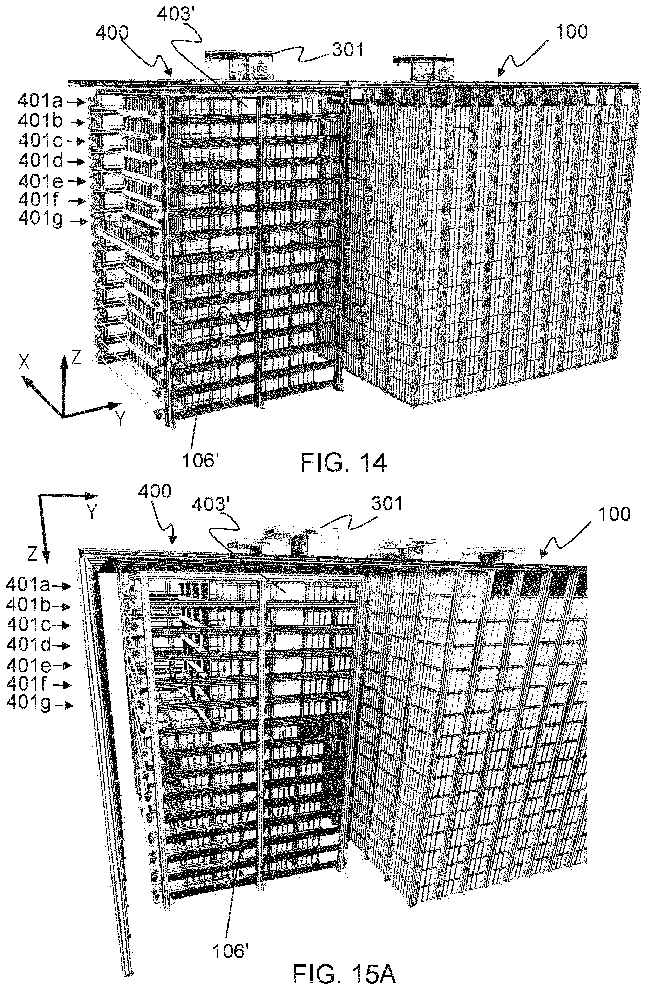

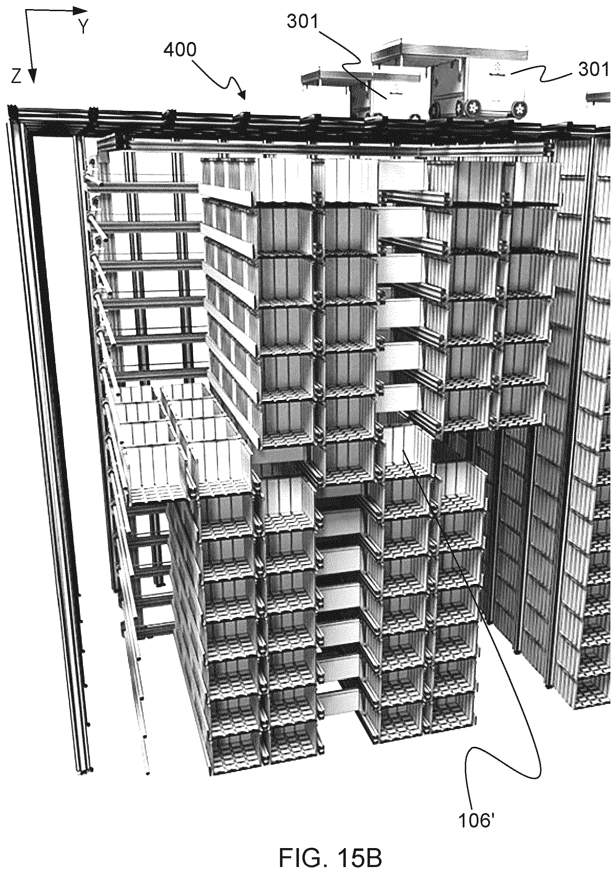

Fig. 14 and 15A are perspective views of a storage system 1 comprising the storage tower 400 during operation. Fig. 15B shows a vertical cross-section of the storage system 1 of Fig. 15A. The figures show the use of a container handling vehicle 301 in which the lifting device extends from the vehicle body by cantilever, but it should be understood that vehicles 201 of the type with a central cavity (e.g., as shown in Fig. 2) may also be employed.

In order to store and retrieve a target storage container 106' using the storage tower 400, the following operations are performed (with reference to Fig. 14):
- The control system 500 gives instructions to the vehicle 301 to pick up a target storage container 106' with coordinates *X,Y,Z*. This position corresponds to a storage container 106 positioned in a container space of a container support 402 forming part of a horizontal container support framework 401g at a depth of 5x*ΔdV+Vr1* below the rail system 408. Since all the openings 403 in the storage tower 400 are initially aligned (with same *X-Y* coordinates), the *X-Y* position of the target opening 403' of the container support framework 401a adjacent the rail system 408 is equal to the *X-Y* positions of the target openings 403' of the underlying container support frameworks 401b-n.
- The vehicle 301 moves by aid of its drive means 301b,c in the *X* and *Y* directions until its lifting device 304 is located directly above the target opening 403' situated in the row of storage containers in which the target storage container 106' is positioned.
- During and/or after movement of the vehicle 301 to the position above the target opening 403', the control system 500 sends an instruction to the support displacement device 700 to displace the container support 402 of the container support framework 401g a sufficient distance in the second direction Yso that the target storage container 106' is vertically aligned with the target openings 403' of the above situated container support frameworks 401a-f.
- During and/or after the displacement of the container support 402, the lifting device 304 of the vehicle 301 is activated and lowered down through the grip opening 415 and the aligned target openings 403' until the gripping part of the lifting device 304 is in position to grip the target storage container 106'.
- After the target storage container 106' has been gripped by the lifting device 304 and lifted above the above situated container support framework 401f, the support displacement device 700 is again activated in order to move the container support 402 back to its initial *Y* position.
- When the target storage container 106' has been lifted above the rail system 408, the vehicle 301 is moved to another location on the rail system 408, for example to a dedicated port column / chute 436 for delivery to an access station 437.

The process has the advantage that the need for digging performed for prior art storage and retrieval system is no longer necessary.

In the operational example of Fig. 14 the target storage container 106' is positioned next to the opening 403 of the same row of container spaces. Some rows of container spaces may comprise more than one container space on either side of the opening 403. If a target storage container 106' is not positioned next to the opening 403, i.e. there is a container space between the target storage container 106' and the opening 403, the container support 402 must be displaced a distance along the second horizontal direction *Y* corresponding to two grid cells 422 to position the target storage container 106' in vertically aligned with the target openings 403' of the above situated container support frameworks 401a-f. From the initial position of the container support 402, there may not be sufficient space in the storage tower 400 for the container support 402 to be displaced a distance corresponding to two grid cells 422 both directions along the second direction Y. In that case the target storage container 106' can be retrieved as illustrated in Fig. 15A by displacing all of the container supports above a distance of one grid cell in the other direction.

The retrieval operation of Fig. 15A is similar to the operation described with reference to Fig. 14. However, an additional step is performed.
- During movement of the vehicle 301 to the position above the target openings 403', the control system 500 sends an instruction to the support displacement devices 700 to displace the container supports 402 of the container support frameworks 401a-f situated above the target storage container 106' a sufficient distance in the second horizontal direction *Y* so that the target storage container 106' is vertically aligned with the target openings 403' of the above situated container support frameworks 401a-f. The container supports 402 of the container support frameworks 401a-f situated above the target storage container 106' are displaced along the second horizontal direction *Y* a distance corresponding to one grid cell 422 and opposite the displacement of the container support 402 of the target storage container 106'.

Fig. 15B shows a cross-section of the storage system 1 in accordance with Fig. 15A. Here two vehicles 301 are simultaneously retrieving respective target containers 106' positioned on the same container support 402. If the control system 500 detects two target storage containers 106' positioned on the same container support 402, and in particular when positioned in the same column of container spaces, the control system 500 may give instructions to two vehicles 301 to pick up these target storage containers 106' simultaneously.

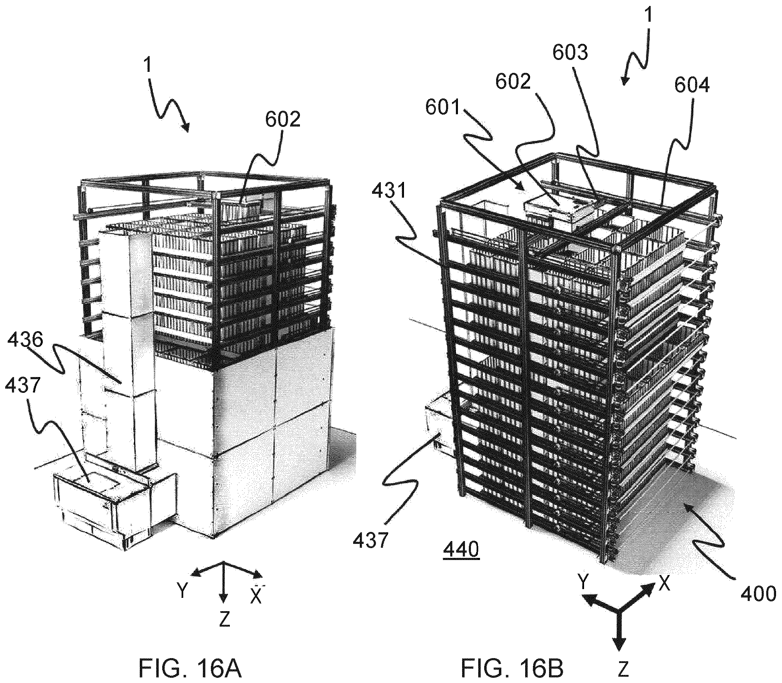

Figs. 16A-B, Fig. 17 and Figs. 18A-B show storage and retrieval system 1 comprising one storage tower 400. Instead of a vehicle 201,301 with wheels moving on a rail system 408, the storage and retrieval system 1 comprises a transport system 601. The transport system 601 comprises a crane 602 moveable in the first direction *X* on a sliding bar 603 extending across the width of the storage tower 400. Movements in the second direction Yis achieved by sliding the sliding bar 603 along two fixed bars 604 extending in the second direction *Y* on both sides of the storage tower 400. In Figs. 16-18, the crane 602 is shown as a container handling vehicle with a cantilever construction supported on two parallel sliding bars 603.

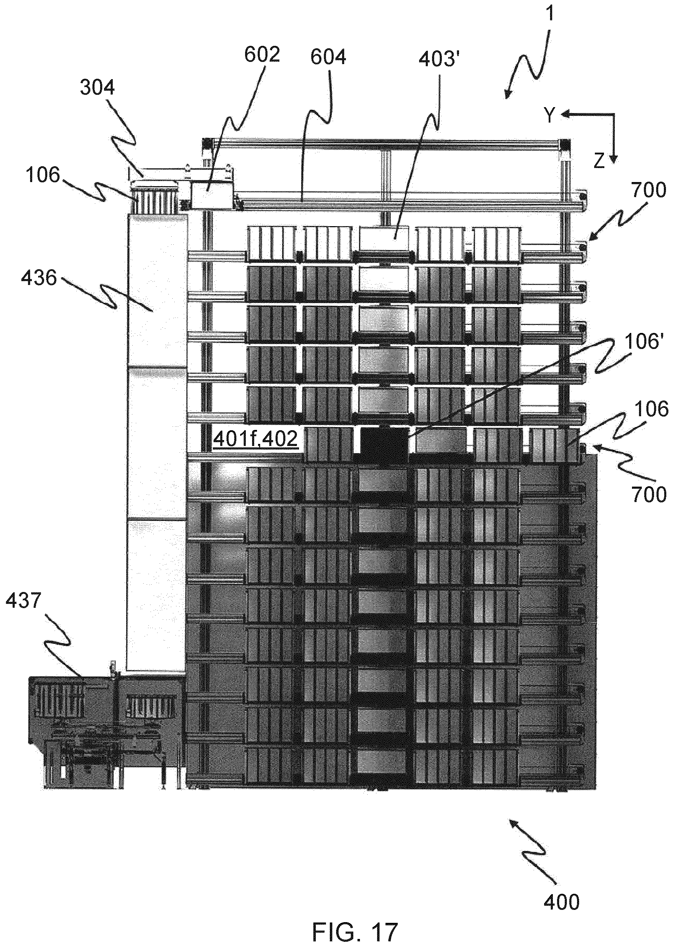

When the transport system 601 receives an instruction from the control system 500 to retrieve a target storage container 106' stored in for example the sixth container support framework 401f counted from above (as shown in Fig. 17), the support displacement device 700 displaces the container support 402 in the Y direction until the target storage container 106' is vertically aligned with the target opening 403' vertically aligned within the above situated five container support frameworks 401a-e. Before, during or after the displacement of the container support 402, the crane 602 of the transport system 601 is moved by use of the sliding bar 603 and the fixed bar 604 to a location in which the lifting device 304 is vertically aligned above the target opening 403' of the first container support framework 401a (and due to the initial alignment, also the corresponding openings 403 of the container support frameworks 401b-e down to at least to the container support framework 401f with the target storage container 106').

The storage tower 400 shown in Figs. 16A-18B also comprises a dedicated port column or chute 436 into which the target storage container 106' can be lowered / raised by use of the lifting device 403 of the crane 602. In Figs. 16A-B and Fig. 17, an access station 437 is shown arranged below the lower end of the chute 436 to receive and to provide storage containers 106 to be retrieved and stored, respectively.

The operations described with reference to Figs. 14 and 15A-B applies mutatis mutandis to a storage tower 400 comprising a transport system 601.

Fig. 18A-B show that the storage tower 400 can comprise horizontal beams 432 for connection to the top of the vertical pillars 431.

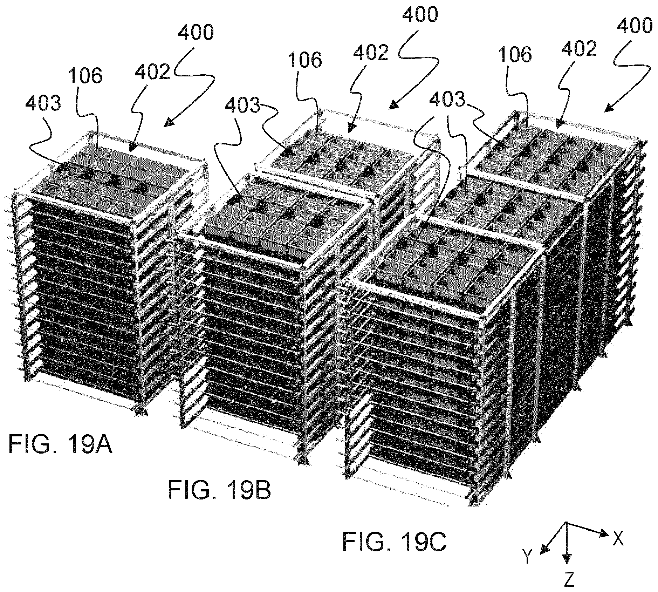

Figs. 19A-C shows three different storage towers 400.

The storage tower 400 in Fig. 19A has container supports 402 with a matrix of container spaces comprising four rows and five columns, i.e. a 4x5 matrix. The four rows of container spaces are symmetric. Each row is configured to receiving four storage containers 106 and comprises one opening 403.

The storage tower 400 in Fig. 19B has container supports 402 with a matrix of container spaces comprising four rows and ten columns, i.e. a 4x10 matrix. The four rows of container spaces are symmetric. Each row is configured to receiving eight storage containers 106 and comprises two openings 403. One container support 402 of the storage tower 400 of Fig. 19B is equal to two container supports 402 of the storage tower 400 of Fig. 19A placed side by side along the second direction *Y*.

The storage tower 400 in Fig. 19C has container supports 402 with a matrix of container spaces comprising four rows and fifteen columns, i.e. a 4x15 matrix. The four rows of container spaces are symmetric. Each row is configured to receiving twelve storage containers 106 and comprises three openings 403. One container support 402 of the storage tower 400 in Fig. 19C is equal to three container supports 402 of the storage tower 400 of Fig. 19A placed side by side along the second direction *Y*.

In Figs. 19B and 19C each row of container spaces displays a plurality of openings 403 distributed with an offset corresponding to *d*+1 grid cells 422 in the second direction *Y*, where d is an integer of 1 or more. In these particular examples *d*=4.

### ISOLATED ENVIRONMENT

According to the present invention, a storage tower 400 as described above is arranged in an isolated environment, for example an isolating housing 800, as shown in Figs 20-22. The isolated environment may be any specialized environment where goods are advantageously separated from the remaining, standard portions of the storage system. Non limiting examples include fireproof and explosion resistant housing for the storage of volatile or explosive goods, a sterile environment for the storage of sterile goods, etc. For the purposes of illustration, the invention will be described in connection with an embodiment in which the isolated environment is an area of reduced temperature, for example a refrigeration or freezer environment for the storage of refrigerated or frozen goods. By storing the goods in the isolated environment, the container handling vehicles may operate on the tracks of the storage system outside of the specialized environment.

Figs. 20-21 illustrate an embodiment of the invention where a storage tower 400 as described below is enclosed by an isolating housing 800. In the embodiment illustrated, the isolating housing 800 is a refrigeration or freezer space and the isolating housing provides thermal insulation, thereby facilitating the use of the storage tower 400 for storing chilled or frozen products. Isolating housing 800 may comprise insulated walls and roof, 800' and 800" respectively. Refrigeration equipment 802 maintains a desired temperature. While the illustrated embodiment shows a refrigeration or freezer space, one skilled in the art would recognize that the isolating housing may be adapted to the needs of any specialized goods stored therein.

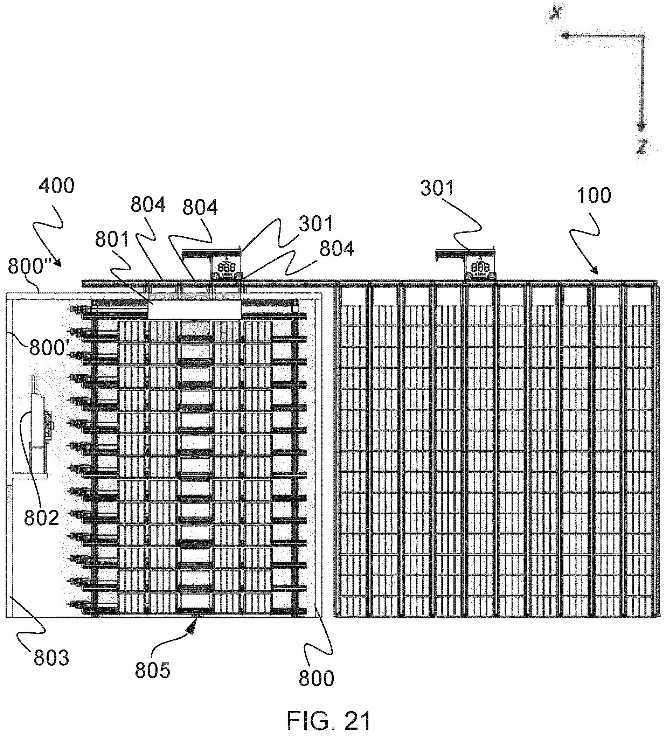

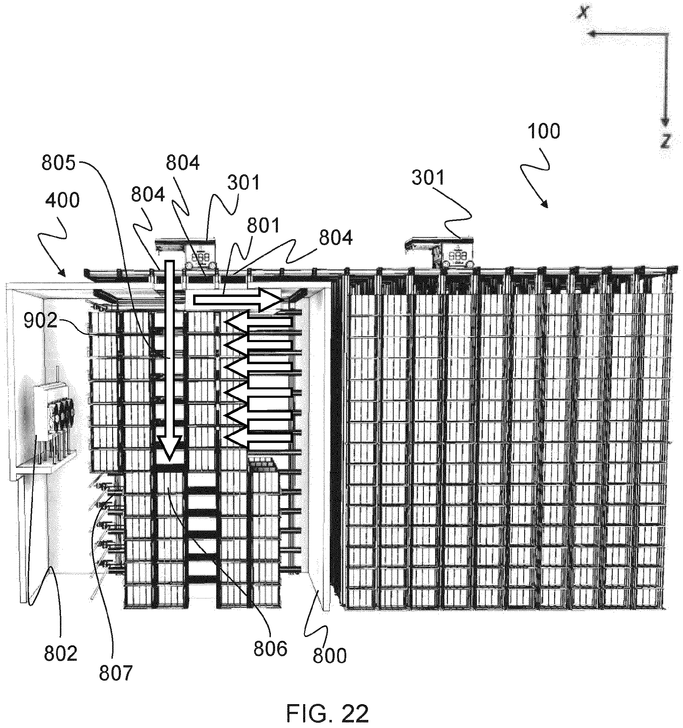

According to one aspect, as shown in Fig. 20, the vehicles 301 may operate between the standard portion of a storage grid 100 and the storage tower 400 in its isolating housing 800. As shown in Fig. 22, the isolating housing 800 comprises housing openings or hatches 804 in roof 800", below the rail system 408 which extends over the housing 800. Thus, the container handling vehicles 301 are able to store and retrieve storage containers 106 in the storage tower through openable hatches 804. The hatches 804 ordinarily remain closed, and are only opened during storing or retrieval of a storage container 106. In one embodiment, the hatches 804 are opened and closed by an hatch barrier 801 arranged at a top level of the storage tower in the housing as shown in Fig 21, though other means of opening and closing hatches are possible.

The isolating housing 800 is exemplified as comprising a door 803 for access to the storage tower 400. Although the door 803 is illustrated as open in Fig. 20, the reader will understand that it is usually closed in order to provide the desired isolating environment.

The cross-section view in Fig. 21 illustrates the inside of the isolating housing 800, where refrigeration equipment 802 is installed to maintain a desired environment or temperature inside the isolating housing 800.

The embodiment of the storage tower 400 arranged inside its isolating environment as shown in Figs. 20-22 operates and is constructed in a similar way to the storage tower 400 described above and illustrated in Figs. 5-16.

Container handling vehicles may access the storage tower through hatches 804 as shown in Fig. 21. One means of opening and closing such hatches is by the use of a moveable barrier 801 as illustrated in Fig. 21 and Fig. 22. Barrier 801 may be a horizontally movable, insulated barrier, arranged and controlled in a similar fashion as a container support arranged in a container support framework. In use, the hatch barrier 801 will typically be the last component to be displaced once the container support frameworks 401 below have moved into place such that a storage container 106 is accessible. The hatch barrier 801 will thus not be kept open for periods longer than that which is necessary to lower and lift a storage container 106 from its storage position by the container handling vehicle 301, thereby reducing gas and/or temperature leakage between the storage tower 400 and the outside environment.

Fig. 21 shows the hatch barrier 801 in a closed position over three housing openings 804 arranged lengthwise in the first direction X. However, as will be apparent to the reader, fewer or more housing openings 804 may be arranged in the isolating housing 800 with a corresponding hatch barrier 801 arranged to cover all the housing openings 804 in a closed position. In fact, as can be seen in Fig. 22 which is a perspective cross section view of the storage tower 400, the housing openings 804 can also extend in a second direction Y. Thus, the exemplary embodiment showed in Fig. 22 has a housing opening 804 corresponding to 3x3 grid cells and an hatch barrier 801 of the same size. Arranging the isolating housing 800 with a bigger housing opening 804 has the advantage that more space is open for access by the container handling vehicle 301, but it may also be advantageous with one or several smaller housing openings 804, and corresponding hatch barrier s 801, that only allows for minimal gas and temperature exchange between the storage tower 400 and the outside environment.

Fig. 22 is a cross sectional view that illustrates the operation of the storage system comprising the isolating housing and its internal storage tower 400. As can be seen, a container handling vehicle 301 has positioned its container lifting device above a hatch 804. The six uppermost container supports 402 have been displaced to the left in the figure, such that their respective openings 403 are in vertical alignment, thus forming a tower port 805. Tower port 805 extends down to a target container 806 stored on a target container support 807. Barrier 801 has been displaced to the right of the figure to open hatch 804 beneath the lifting device, which can then be lowered down the tower port 805 to retrieve the target container, without the need to perform a digging operation or place non-target containers at temporary places on the top of the grid as is required in prior art systems. It should be understood that the direction of displacement of the container supports and the barrier are for illustration purposes, and different directions of displacement are possible.

In certain embodiments, not illustrated herein, two storage towers 400 may be arranged one on top of another. For example, an upper tower may be arranged outside an isolating housing 800 and a lower tower may be arranged inside an isolating housing 800. The hatch barrier 801 may thus be arranged between the two storage towers 400, alternatively two hatch barriers 801 may be arranged one on top another between the storage towers 400 such that the hatch barriers 801 may be displaced in order to close off a lower isolated tower from the upper storage tower. Other embodiments may also be envisaged where portions of a storage tower 400 are isolated from each other by the use of one or more hatch barriers 801, such that a storage tower 400 could e.g. contain frozen and chilled goods at different levels.

**LIST OF REFERENCE NUMBERS**

| | |
|---|---|
| 1 | Storage and retrieval system |
| 80 | Product items |
| 100 | Framework structure / prior art storage grid |
| 102 | Upright members of framework structure |
| 103 | Horizontal members of framework structure |
| 105 | Storage column |
| 106 | Storage container |
| 106' | Particular position of a storage container / target storage container |
| 106" | Vacant container space for a storage container |
| 107 | Stack |
| 108 | Prior art rail system |
| 110 | Parallel rails in first direction (*X*) |
| 110a | First rail in first direction (*X*) |
| 110b | Second rail in first direction (*X*) |
| 111 | Parallel rail in second direction (*Y*) |
| 111a | First rail of second direction (*Y*) |
| 111b | Second rail of second direction (*Y*) |
| 115 | Grid opening |
| 119 | First port column |
| 120 | Second port column |
| 201 | Prior art storage container vehicle |
| 201a | Vehicle body of the storage container vehicle 101 |
| 201b | Drive means / wheel arrangement, first direction (*X*) |
| 201c | Drive means / wheel arrangement, second direction (*Y*) |
| 301 | Prior art cantilever storage container vehicle / remotely operated vehicle |
| 301a | Vehicle body of the vehicle 301 |
| 301b | Drive means in first direction (*X*) |
| 301c | Drive means in second direction (*Y*) |
| 304 | Lifting device |
| 400 | Storage tower |
| 401 | (Horizontally extending) container support framework |
| 401a | First container support framework |
| 401b-n | Second / underlying container support framework(s) |
| 402 | Container support |
| 403, 403a-d | Opening (in container support 402) |
| 403', 403a'-d' | Target opening |
| 404 | Support plate for storage container |
| 405 | Stabilization rib (for stabilizing storage containers) |
| 406 | First container support beam (oriented in the first direction *X*) |
| 407 | Second container support beam (oriented in the second direction *Y*) |
| 408 | Rail system |
| 408' | Coupling rail system |
| 409 | Guiding structure (for opening) |
| 410 | A first set of parallel rails |
| 411 | A second set of parallel rails |
| 415 | Grid opening |
| 422 | Grid cell |
| 431 | Vertical pillar |
| 432 | Horizontal beam (for connecting vertical pillars 431) |
| 435 | Pillar bracket (for vertical pillar 431) |
| 436 | Port column / chute |
| 437 | Access station |
| 440 | Floor |
| 500 | Control system |
| 601 | Transport system |
| 602 | Crane |
| 603 | Sliding bar |
| 604 | Fixed bar |
| 700 | Support displacement device |
| 701 | Electric motor |
| 702 | Drive shaft |
| 706 | First belt/chain |
| 707 | Second belt/chain |
| 708 | Belt wheel |
| 709 | Shelf guide |
| 709' | Horizontal movement shelf roller |
| 710 | Guiding tracks (configured to receive shelf rollers 709, 709') |
| 710' | Guiding track, vertical part |
| 710" | Guiding track, horizontal part |
| 711 | Bracket (for connection of the container support 402 to the second belt/chain 707) |
| 712 | Bracket (for drive shaft 702) |
| 713 | Bracket (for electric motor 701) |
| *X* | First direction |
| *Y* | Second direction |
| *Z* | Third direction |
| *Prs* | Horizontal plane |
| *W_{f}* | Width of storage container |
| *L_{f}* | Length of storage container |
| *H_{f}* | Height of storage container |
| *A_{f}* | Areal of storage container |
| *Wr* | Width of one rail |
| *Vᵣ₁* | Offset between lower edge of rail system and lower edge of first container support framework |
| *ΔdV, ΔdVb-n* | Offsets between lower edge of container support framework below the first container support framework |
| *CP* | Cantilever part of the rail system (108) or traveling crane system (601) |
| 800 | Isolating housing |
| 800' | walls |
| 800" | roof |
| 801 | hatch barrier |
| 802 | Refrigeration equipment |
| 803 | Access door |
| 804 | Housing opening (Hatch) |
| 805 | Tower port |
| 806 | Target container |
| 807 | Target container support |

## Claims

1. An automated storage and retrieval system, comprising:
a. an isolating housing (800), comprising walls (800') and a roof (800"), and arranged to isolate goods stored within the isolating housing from an outside environment, the goods being stored in storage containers (106),
b. one or more openable and closable housing openings or hatches (804) arranged in the roof of the isolating housing,
c. a rail system (408) arranged above the roof, upon which rail system may travel one or more wheeled container handling vehicles (301), the container handling vehicles comprising a lifting device (304) for lifting and lowering containers, the rail system at least arranged such that a container handling vehicle may be positioned with its lifting device positioned (304) above a hatch (804), and
d. an automated control system (500):
e. a storage tower (400) arranged inside the isolating housing (800), the storage tower being accessible to the container handling vehicle or vehicles through a hatch (804), the storage tower comprising:
i. a plurality of vertically stacked container supports (402), the container supports being in the form of horizontally movable shelves upon which may rest a plurality of storage containers (106), the container supports having a lateral width corresponding to a plurality of container spaces (106") and a longitudinal length corresponding to a plurality of container spaces (106"), thereby defining a plurality of lateral rows of container spaces, and wherein one or more of the container spaces of a lateral row is an opening (403) corresponding in size to a storage container such that storage containers may pass therethrough,
ii. means for horizontally moving container supports in order to align the opening (403) of vertically adjacent container supports to form a tower port (805) beneath a hatch (804), and
iii. means for horizontally moving a target container support (807) in order to position a target container (806) at the bottom of the tower port (807), and
f. whereby the container handling vehicle may lower its lifting device though the hatch, down the tower port (805), and access the target container.

2. An automated storage and retrieval system according to claim 1, wherein the rail system (408) arranged above the roof of the isolating housing (800) is operatively connected to a standard portion of an automated grid storage system, of the type comprising a framework structure (100) comprising upright members (102), horizontal members (103) and a storage volume comprising storage columns (105) arranged in rows between the upright members (102) and the horizontal members (103), and further comprising a rail system (108) arranged across the top of framework structure (100), on which rail system (108) a plurality of container handling vehicles (201,301) are operated to raise storage containers (106) from, and lower storage containers (106) into, the storage columns (105), and also to transport the storage containers (106) above the storage columns (105), the rail system (108) comprising a first set of parallel rails (110) arranged to guide movement of the container handling vehicles (201,301) in a first direction (X) across the top of the frame structure (100), and a second set of parallel rails (111) arranged perpendicular to the first set of rails (110) to guide movement of the container handling vehicles (201,301) in a second direction (Y) which is perpendicular to the first direction (X).

3. An automated storage and retrieval system according to one of the preceding claims, wherein the storage tower (400) comprises: a plurality of horizontally extending container supporting frameworks (401) distributed with vertical offsets (*ΔdVb-n*),
a. wherein the plurality of horizontal container supporting frameworks (401) comprises
i. a first container supporting framework (401a) and
ii.at least one second container supporting framework (401b-n) arranged beneath and extending parallel to the first container supporting framework (401a),
b. wherein each of the first and the at least one second container supporting frameworks (401b-n) comprises
i. a horizontally extending container support (402) with principal directions in a first direction (*X*) and an orthogonal second direction (*Y*)*,* each container support (402) being configured as a matrix of container spaces with a plurality of columns of container spaces arranged in the first direction (*X*) and a plurality of rows of container spaces arranged in the second direction (*Y*),
c. wherein each row of container spaces of the first container supporting framework (401a)
i. is configured to receive a plurality of storage containers (106) and
ii.displays at least one opening (403) extending along the second direction (Y), the at least one opening (403) having an opening size being at least a maximum horizontal cross section (*A_{f}*) of the storage containers (106) to be stored,
d. wherein the at least one opening (403) of the first container supporting framework (401a) and the at least one opening (403) of the at least one second container supporting framework (401b-n) can be aligned vertically with respect to each other,
e. wherein at least one container support (402) is displaceable along the second direction (*Y*),
f. wherein at least one container supporting framework (401a-n) further comprises a support displacement device (700) configured to displace the displaceable container support (402).

4. An automated storage and retrieval system according to one of the preceding claims, wherein the storage tower (400) comprises an hatch barrier (801) arranged above the container supporting framework (401), the barrier being configured to cover and isolate the housing opening (804) and wherein the barrier (801) is displaceable horizontally displaceable along the first direction (X) or the second direction (Y) by a support displacement device (700).

5. An automated storage and retrieval system according to one of the preceding claims, wherein the support displacement device (700) comprises a motor for driving a linear actuator, gearwheel drive, chain drive, belt drive or any combination thereof, the motor being arranged outside a horizontal extent of the respective container supporting framework (401) containing at least one displaceable container support (402) to be displaced,
or wherein the displacement device (700) is a direct drive mechanism arranged on the container support (402).

6. An automated storage and retrieval system according to one of the preceding claims, wherein the container supports (402) comprises vertical guide plates (409) arranged at least partly around the perimeter of each of the at least one opening (403), the vertical guide plates of vertically adjacent opening arranged to cooperate to form the tower port (805).

7. A automated storage and retrieval system according to one of the preceding claims, wherein the isolating housing (800), is a thermally isolating housing, and wherein refrigeration equipment (802) is arranged in connection with the housing.

8. A automated storage and retrieval system according to one of the preceding claims, wherein the isolating housing (800), is a fire or blast resistant housing adapted for storing flammable or explosive materials.

9. A method for storing or retrieving specialized goods in an automated storage and retrieval system according to one of the claims 1-8, the method comprising the steps of:
a. storing specialized goods in the storage tower, the goods being of a type that are advantageously separated from an ambient environment outside the isolating housing,
b. using the control system (500) to instruct container supports to move in a horizontal direction in order to vertically align their respective openings in order to form a tower port beneath a hatch,
c. using the control system (500) to instruct a target container support to move in a horizontal direction in order to position a target container at the bottom of the tower port, or to position an empty container space at the bottom of the tower port,
d. using the control system (500) to instruct a container handling vehicle to position its lifting device above the hatch,
e. opening the hatch,
f. instructing the container handling vehicle to lower its lifting device down the tower port, engage and lift the target container out of the isolating housing, or to lower a container down the tower port to the empty container space, and
g. closing the hatch.

10. The method of claim 9, wherein the specialized goods are refrigerated or frozen items, and wherein the isolated environment has a lower temperature than the ambient environment outside the isolating housing.

11. The method of claim 9, wherein the specialized goods are volatile, flammable or potentially explosive goods, and the isolating housing is a fireproof room.

## Patentansprüche

1. Automatisiertes Ein- und Auslagersystem, das Folgendes umfasst:
a. ein isolierendes Gehäuse (800), das Wände (800') und ein Dach (800") umfasst und das ausgelegt ist, Güter, die in dem isolierenden Gehäuse gelagert sind, von einer Außenumgebung zu isolieren, wobei die Güter in Lagercontainern (106) gelagert werden,
b. eine oder mehrere Öffnungen oder Luken (804) im Gehäuse, die geöffnet und geschlossen werden können, die in dem Dach des isolierenden Gehäuses angeordnet sind,
c. ein Schienensystem (408), das oberhalb des Dachs angeordnet ist, auf dem ein oder mehrere Containerumschlagfahrzeuge (301) auf Rädern fahren können, wobei die Containerumschlagfahrzeuge eine Hebevorrichtung (304) zum Heben und Senken der Container umfassen und das Schienensystem zumindest so ausgelegt ist, dass ein Containerumschlagfahrzeug derart positioniert werden kann, dass seine Hebevorrichtung (304) oberhalb einer Luke (804) positioniert ist, und
d. ein automatisiertes Steuerungssystem (500);
e. einen Lagerturm (400), der in dem isolierenden Gehäuse (800) angeordnet ist, wobei der Lagerturm dem Containerumschlagfahrzeug oder den Containerumschlagfahrzeugen durch eine Luke (804) zugänglich ist, wobei der Lagerturm Folgendes umfasst:
i. mehrere vertikal gestapelte Containerträger (402), wobei die Containerträger in der Form von horizontal beweglichen Regalen sind, auf denen mehrere Lagercontainer (106) liegen können, wobei die Containerträger eine laterale Breite, die mehreren Containerplätzen (106") entspricht, und eine longitudinale Länge, die mehreren Containerplätzen (106") entspricht, aufweisen, wodurch mehrere laterale Reihen von Containerplätzen definiert sind, und wobei einer oder mehrere der Containerplätze einer lateralen Reihe einer Öffnung (403) entspricht, die der Größe nach einem Lagercontainer entspricht, sodass die Lagercontainer sich durch diese hindurch bewegen können,
ii. Mittel zum horizontalen Bewegen von Containerträgern, um die Öffnung (403) von vertikal benachbarten Containerträgern auszurichten, um einen Turmanschluss (805) unterhalb einer Luke (804) zu bilden, und
iii. Mittel zum horizontalen Bewegen eines Ziel-Containerträgers (807), um einen Ziel-Container (806) auf dem Boden des Turmanschlusses (807) zu positionieren, und
f. wobei das Containerumschlagfahrzeug seine Hebevorrichtung durch die Luke und den Turmanschluss (805) hinunter absenken kann und auf den Ziel-Container zugreifen kann.

2. Automatisiertes Ein- und Auslagersystem nach Anspruch 1, wobei das Schienensystem (408), das oberhalb des Dachs des isolierenden Gehäuses (800) angeordnet ist, mit einem Standardabschnitt eines automatisierten Gitterlagersystems betriebstechnisch verbunden ist, das von dem Typ ist, der eine Rahmenstruktur (100) umfasst, die aufrecht stehende Elemente (102), horizontale Elemente (103) und ein Lagervolumen umfasst, das Lagersäulen (105) umfasst, die in Reihen zwischen den aufrecht stehenden Elementen (102) und den horizontalen Elementen (103) angeordnet sind, und ferner ein Schienensystem (108) umfasst, das über die Oberseite der Rahmenstruktur (100) angeordnet ist, wobei auf dem Schienensystem (108) mehrere Containerumschlagfahrzeuge (201, 301) betrieben werden, um Lagercontainer (106) aus den Lagersäulen (105) anzuheben und Lagercontainer (106) in die Lagersäulen (105) abzusenken, und auch um die Lagercontainer (106) oberhalb der Lagersäulen (105) zu transportieren, wobei das Schienensystem (108) einen ersten Satz von parallelen Schienen (110), die angeordnet sind, um eine Bewegung der Containerumschlagfahrzeuge (201, 301) in einer ersten Richtung (X) über die Oberseite der Rahmenstruktur (100) zu führen, und einen zweiten Satz von parallelen Schienen (111), die senkrecht zu dem ersten Satz von Schienen (110) angeordnet sind, um die Bewegung der Containerumschlagfahrzeuge (201, 301) in einer zweiten Richtung (Y), die senkrecht zu der ersten Richtung (X) ist, zu führen, umfasst.

3. Automatisiertes Ein- und Auslagersystem nach einem der vorhergehenden Ansprüche, wobei der Lagerturm (400) Folgendes umfasst: mehrere sich horizontal erstreckende Containertragrahmen (401), die mit vertikalen Versätzen (ΔdVb-n) verteilt sind,
a. wobei die mehreren horizontalen Containertragrahmen (401) Folgendes umfassen:
i. einen ersten Containertragrahmen (401a), und
ii. mindestens einen zweiten Containertragrahmen (401b-n), der darunter angeordnet ist und sich parallel zu dem ersten Containertragrahmen (401a) erstreckt,
b. wobei jeder des ersten und des mindestens einen zweiten Containertragrahmens (401b-n) Folgendes umfasst: i. einen sich horizontal erstreckenden Containerträger (402) mit Hauptrichtungen in einer ersten Richtung (X) und einer senkrechten zweiten Richtung (Y), wobei jeder Containerträger (402) als eine Matrix von Containerplätzen mit mehreren Spalten von Containerplätzen, die in der ersten Richtung (X) angeordnet sind, und mehreren Reihen von Containerplätzen, die in der zweiten Richtung (Y) angeordnet sind, konfiguriert ist,
c. wobei jede Reihe von Containerplätzen des ersten Containertragrahmens (401a)
i. konfiguriert ist, mehrere Lagercontainer (106) aufzunehmen, und
ii. mindestens eine Öffnung (403) anzeigt, die sich entlang der zweiten Richtung (Y) erstreckt, wobei die mindestens eine Öffnung (403) eine Öffnungsgröße aufweist, die zumindest einem maximalen horizontalen Querschnitt (Af) der zu lagernden Lagercontainer (106) entspricht,
d. wobei die mindestens eine Öffnung (403) des ersten Containertragrahmens (401a) und die mindestens eine Öffnung (403) des mindestens einen zweiten Containertragrahmens (401b-n) zueinander vertikal ausgerichtet werden können,
e. wobei mindestens ein Containerträger (402) entlang der zweiten Richtung (Y) verschoben werden kann,
f. wobei mindestens ein Containertragrahmen (401a-n) ferner eine Trägerverlagerungsvorrichtung (700) umfasst, die konfiguriert ist, den verschiebbaren Containerträger (402) zu verlagern.

4. Automatisiertes Ein- und Auslagersystem nach einem der vorhergehenden Ansprüche, wobei der Lagerturm (400) eine Lukenbarriere (801) umfasst, die oberhalb des Containertragrahmens (401) angeordnet ist, wobei die Barriere konfiguriert ist, die Gehäuseöffnung (804) abzudecken und zu isolieren und wobei die Barriere (801) horizontal entlang der ersten Richtung (X) oder der zweiten Richtung (Y) durch eine Trägerverschiebungsvorrichtung (700) verschoben werden kann.

5. Automatisiertes Ein- und Auslagersystem nach einem der vorhergehenden Ansprüche, wobei die Trägerverlagerungsvorrichtung (700) einen Motor zum Antreiben eines linearen Aktuators, eines Zahnradantriebs, eines Kettenantriebs, eines Riemenantriebs oder einer beliebigen Kombination daraus umfasst, wobei der Motor außerhalb einer horizontalen Abmessung des jeweiligen Containertragrahmens (401) angeordnet ist, der mindestens einen zu verlagernden verschiebbaren Containerträger (402) enthält,
wobei die Verlagerungsvorrichtung (700) ein Direktantriebsmechanismus ist, der am Behälterträger (402) angeordnet ist.

6. Automatisiertes Ein- und Auslagersystem nach einem der vorhergehenden Ansprüche, wobei die Containerträger (402) vertikale Führungsplatten (409) umfassen, die zumindest teilweise um den Umfang jeder der mindestens einen Öffnung (403) angeordnet sind, wobei die vertikalen Führungsplatten von vertikal benachbarten Öffnungen ausgelegt sind, zusammenzuwirken, um den Turmanschluss (805) zu bilden.

7. Automatisiertes Ein- und Auslagersystem nach einem der vorhergehenden Ansprüche, wobei das isolierende Gehäuse (800) ein thermisch isolierendes Gehäuse ist und wobei Kühlausrüstung (802) in Verbindung mit dem Gehäuse angeordnet ist.

8. Automatisiertes Ein- und Auslagersystem nach einem der vorhergehenden Ansprüche, wobei das isolierende Gehäuse (800) ein feuer- oder explosionsbeständiges Gehäuse ist, das zur Lagerung von brennbaren oder explosiven Materialien geeignet ist.

9. Verfahren zum Ein- oder Auslagern von Spezialgütern in einem automatisierten Ein- und Auslagersystem nach einem der Ansprüche 1-8, wobei das Verfahren die folgenden Schritte umfasst:
a. Lagern von Spezialgütern in dem Lagerturm, wobei die Güter von einem Typ sind, die bevorzugt von einer Umgebung außerhalb des Isoliergehäuses getrennt werden,
b. Verwenden des Steuerungssystems (500), um Containerträger anzuweisen, sich in einer horizontalen Richtung zu bewegen, um ihre jeweiligen Öffnungen vertikal auszurichten, um einen Turmanschluss unterhalb einer Luke zu bilden,
c. Verwenden des Steuerungssystems (500), um einen Ziel-Containerträger anzuweisen, sich in einer horizontalen Richtung zu bewegen, um einen Ziel-Container auf dem Boden des Turmanschlusses zu positionieren oder um einen leeren Containerplatz auf dem Boden des Turmanschlusses zu positionieren,
d. Verwenden des Steuerungssystems (500), um ein Containerumschlagfahrzeug anzuweisen, seine Hebevorrichtung oberhalb der Luke zu positionieren,
e. Öffnen der Luke,
f. Anweisen des Containerumschlagfahrzeugs seine Hebevorrichtung in den Turmanschluss abzusenken, mit dem Zielcontainer in Eingriff zu gelangen und diesen aus dem isolierenden Gehäuse zu heben oder einen Container in den Turmanschluss zu dem leeren Containerplatz abzusenken, und
g. Schließen der Luke.

10. Verfahren nach Anspruch 9, wobei die Spezialgüter gekühlte oder gefrorene Artikel sind und wobei die isolierte Umgebung eine tiefere Temperatur aufweist als die Umgebung außerhalb des isolierenden Gehäuses.

11. Verfahren nach Anspruch 9, wobei die Spezialgüter flüchtige, brennbare oder potenziell explosive Güter sind und das isolierende Gehäuse ein feuerfester Raum ist.

## Revendications

1. Système de stockage et de récupération automatisé comprenant :
a. un logement isolant (800), comprenant des parois (800') et un toit (800''), et conçu pour isoler des marchandises stockées dans le logement isolant d'un environnement extérieur, les marchandises étant stockées dans des contenants de stockage (106),
b. une ou plusieurs ouvertures ou trappes (804) de logement pouvant être ouvertes et fermées situées dans le toit du logement isolant,
c. un système de rails (408) disposé au-dessus du toit, sur lequel système de rails peuvent se déplacer un ou plusieurs véhicules de manutention de contenants (301) à roues, les véhicules de manutention de contenants comprenant un dispositif de levage (304) pour lever et abaisser des contenants, le système de rails étant au moins disposé de sorte qu'un véhicule de manutention de contenant puisse être positionné avec son dispositif de levage (304) positionné au-dessus d'une trappe (804), et
d. un système de commande automatisé (500) :
e. une tour de stockage (400) disposée à l'intérieur du logement isolant (800), la tour de stockage étant accessible au ou aux véhicules de manutention de contenants par une trappe (804), la tour de stockage comprenant :
i. une pluralité de supports de contenant (402) empilés verticalement, les supports de contenant se présentant sous la forme d'étagères mobiles horizontalement sur lesquelles peut reposer une pluralité de contenants de stockage (106), les supports de contenant ayant une largeur latérale correspondant à une pluralité d'espaces de contenant (106'') et une longueur longitudinale correspondant à une pluralité d'espaces de contenant (106''), définissant ainsi une pluralité de rangées latérales d'espaces de contenant, et un ou plusieurs des espaces de contenant d'une rangée latérale étant une ouverture (403) dont la taille correspond à celle d'un contenant de stockage, de sorte que des contenants de stockage peuvent passer à travers celle-ci,
ii. un moyen pour déplacer horizontalement des supports de contenant afin d'aligner l'ouverture (403) de supports de contenant adjacents verticalement pour former un orifice de tour (805) sous une trappe (804), et
iii. un moyen pour déplacer horizontalement un support de contenant cible (807) afin de positionner un contenant cible (806) au fond de l'orifice de tour (807), et
f. moyennant quoi le véhicule de manutention de contenants peut abaisser son dispositif de levage à travers la trappe, vers le bas dans l'orifice de tour (805) et accéder au contenant cible.

2. Système de stockage et de récupération automatisé selon la revendication 1, le système de rails (408) disposé au-dessus du toit du logement isolant (800) étant relié fonctionnellement à une partie standard d'un système de stockage en grille automatisé, du type comprenant une structure de cadre (100) comprenant des éléments verticaux (102), des éléments horizontaux (103) et un volume de stockage comprenant des colonnes de stockage (105) disposées en rangées entre les éléments verticaux (102) et les éléments horizontaux (103), et comprenant en outre un système de rails (108) disposé en travers de la partie supérieure de la structure de cadre (100), sur lequel système de rails (108) une pluralité de véhicules de manutention de contenants (201, 301) étant actionnés pour lever les contenants de stockage (106) des colonnes de stockage (105) et abaisser les contenants de stockage (106) dans celles-ci, et également pour transporter les contenants de stockage (106) au-dessus des colonnes de stockage (105), le système de rails (108) comprenant un premier ensemble de rails parallèles (110) disposés pour guider le mouvement des véhicules de manutention de contenants (201, 301) dans une première direction (X) à travers la partie supérieure de la structure de cadre (100), et un second ensemble de rails parallèles (111) disposés perpendiculairement au premier ensemble de rails (110) pour guider le mouvement des véhicules de manutention de contenants (201, 301) dans une seconde direction (Y) qui est perpendiculaire à la première direction (X).

3. Système de stockage et de récupération automatisé selon l'une des revendications précédentes, la tour de stockage (400) comprenant : une pluralité de cadres de support de contenant (401) s'étendant horizontalement répartis avec des décalages verticaux (ΔdVb-n),
a. la pluralité de cadres de support de contenant (401) horizontaux comprenant
i. un premier cadre de support de contenant (401a) et
ii. au moins un second cadre de support de contenant (401b-n) disposé sous le premier cadre de support de contenant (401a) et s'étendant parallèlement à celui-ci,
b. chacun du premier et de l'au moins un second cadre de support de contenant (401b-n) comprenant
i. un support de contenant (402) s'étendant horizontalement avec des directions principales dans une première direction (X) et une seconde direction orthogonale (Y), chaque support de contenant (402) étant conçu sous la forme d'une matrice d'espaces de contenant comportant une pluralité de colonnes d'espaces de contenant disposées dans la première direction (X) et une pluralité de rangées d'espaces de contenant disposées dans la seconde direction (Y),
c. chaque rangée d'espaces de contenant du premier cadre de support de contenant (401a)
i. étant conçue pour recevoir une pluralité de contenants de stockage (106) et
ii. présentant au moins une ouverture (403) s'étendant le long de la seconde direction (Y), l'au moins une ouverture (403) ayant une taille d'ouverture correspondant au moins à une section transversale horizontale maximale (A_{f}) des contenants de stockage (106) à stocker,
d. l'au moins une ouverture (403) du premier cadre de support de contenant (401a) et l'au moins une ouverture (403) de l'au moins un second cadre de support de contenant (401b-n) pouvant être alignées verticalement l'une par rapport à l'autre,
e. au moins un support de contenant (402) étant déplaçable le long de la seconde direction (Y),
f. au moins un cadre de support de contenant (401a-n) comprenant en outre un dispositif de déplacement de support (700) conçu pour déplacer le support de contenant (402) déplaçable.

4. Système de stockage et de récupération automatisé selon l'une des revendications précédentes, la tour de stockage (400) comprenant une barrière de trappe (801) disposée au-dessus du cadre de support de contenant (401), la barrière étant conçue pour recouvrir et isoler l'ouverture de logement (804) et la barrière (801) étant déplaçable horizontalement le long de la première direction (X) ou de la seconde direction (Y) par un dispositif de déplacement de support (700).

5. Système de stockage et de récupération automatisé selon l'une des revendications précédentes, le dispositif de déplacement de support (700) comprenant un moteur pour entraîner un actionneur linéaire, entraînement par roue dentée, entraînement par chaîne, entraînement par courroie ou toute combinaison de ceux-ci, le moteur étant disposé à l'extérieur d'une étendue horizontale du cadre de support de contenant (401) respectif contenant au moins un support de contenant (402) déplaçable devant être déplacé,
ou le dispositif de déplacement (700) étant un mécanisme d'entraînement direct disposé sur le support de contenant (402).

6. Système de stockage et de récupération automatisé selon l'une des revendications précédentes, les supports de contenant (402) comprenant des plaques de guidage verticales (409) disposées au moins partiellement autour du périmètre de chacune de l'au moins une ouverture (403), les plaques de guidage verticales de l'ouverture verticalement adjacente étant conçues pour coopérer pour former l'orifice de tour (805).

7. Système de stockage et de récupération automatisé selon l'une des revendications précédentes, le logement isolant (800) étant un logement thermiquement isolant, et un équipement de réfrigération (802) étant disposé en liaison avec le logement.

8. Système de stockage et de récupération automatisé selon l'une des revendications précédentes, le logement isolant (800) étant un logement résistant au feu ou aux explosions conçu pour stocker des matières inflammables ou explosives.

9. Procédé pour stocker ou récupérer des marchandises spécialisées dans un système de stockage et de récupération automatisé selon l'une des revendications 1 à 8, le procédé comprenant :
a. le stockage de marchandises spécialisées dans la tour de stockage, les marchandises étant d'un type qui est avantageusement séparé d'un environnement ambiant à l'extérieur du logement isolant,
b. l'utilisation du système de commande (500) pour instruire aux supports de contenant de se déplacer dans une direction horizontale afin d'aligner verticalement leurs ouvertures respectives afin de former un orifice de tour sous une trappe,
c. l'utilisation du système de commande (500) pour instruire à un support de contenant cible de se déplacer dans une direction horizontale afin de positionner un contenant cible au fond de l'orifice de tour, ou de positionner un espace de contenant vide au fond de l'orifice de tour,
d. l'utilisation du système de commande (500) pour instruire à un véhicule de manutention de contenants de positionner son dispositif de levage au-dessus de la trappe,
e. l'ouverture de la trappe,
f. l'instruction au véhicule de manutention de contenants de baisser son dispositif de levage dans l'orifice de tour, de venir en prise avec le contenant cible et de lever celui-ci hors du logement isolant, ou de baisser un contenant dans l'orifice de tour jusqu'à l'espace de contenant vide, et
g. la fermeture de la trappe.

10. Procédé selon la revendication 9, les marchandises spécialisées étant des articles réfrigérés ou congelés, et l'environnement isolé ayant une température inférieure à l'environnement ambiant à l'extérieur du logement isolant.

11. Procédé selon la revendication 9, les marchandises spécialisées étant des marchandises volatiles, inflammables ou potentiellement explosives, et le logement isolant étant une pièce ignifuge.
